# EUROPÄISCHE PATENTSCHRIFT

(11) **EP 1 756 236 B1**
(45) Veröffentlichungstag und Bekanntmachung des Hinweises auf die Patenterteilung: **31.10.2007**
(21) Anmeldenummer: 05744583.5
(22) Anmeldetag: 18.05.2005
(51) Int. Cl.: C09D 5/08, C09D 5/10, C09D 5/24

(54) **STRAHLUNGSHÄRTBARES ELEKTRISCH LEITFÄHIGES BESCHICHTUNGSGEMISCH**
RADIATION-CURABLE, ELECTRICALLY CONDUCTIVE COATING MIXTURE
MELANGE DE REVETEMENT ELECTRIQUEMENT CONDUCTEUR RADIODURCISSABLE

(30) Priorität: 16.06.2004 DE 102004028764
(43) Veröffentlichungstag der Anmeldung: 28.02.2007
(73) Patentinhaber: Henkel Kommanditgesellschaft auf Aktien, 40589 Düsseldorf (DE)
(72) Erfinder: KOCH, Matthias, Glastonbury, CT 06033 (US); UNGER, Kerstin, 46049 Oberhausen (DE); LORENZ, Wolfgang, 40699 Erkrath (DE); KUNZ, Andreas, 42855 Remscheid (DE); WILKE, Eva, 42781 Haan (DE)
(86) Internationale Anmeldenummer: PCT/EP2005/005376
(87) Internationale Veröffentlichungsnummer: WO 2005/123849

(56) Entgegenhaltungen:
- WO-A-00/75250
- WO-A-01/85860
- DE-A1- 3 018 765

## Beschreibung

Die vorliegende Erfindung betrifft elektrisch leitfähige und elektrisch schweißbare Korrosionsschutzzusammensetzungen zur Beschichtung von Metalloberflächen, ein Verfahren zur Beschichtung von Metalloberflächen mit elektrisch leitfähigen organischen Beschichtungen sowie entsprechend beschichtete und gegebenenfalls überlackierte Metallbänder, -bleche oder -teile.

In der metallverarbeitenden Industrie, insbesondere beim Bau von Kraftfahrzeugen, müssen die metallischen Bestandteile der Erzeugnisse vor Korrosion geschützt werden. Nach herkömmlichem Stand der Technik werden dabei die Bleche im Walzwerk zunächst mit Korrosionsschutzölen überzogen und vor der Verformung und dem Stanzen ggf. mit Ziehfetten beschichtet. Im Kraftfahrzeugbau werden dabei für die Karosserie bzw. Karosserieteile entsprechend geformte Blechteile ausgestanzt und unter Verwendung von besagten Ziehfetten oder -ölen im Tiefziehverfahren verformt, dann im allgemeinen durch Schweißen und/oder Bördeln und/oder Kleben zusammengefügt und anschließend aufwendig gereinigt. Daran schließen sich die korrosionsschützenden Oberflächenvorbehandlungen wie Phosphatierung und/oder Chromatierung an, worauf eine erste Lackschicht mittels Elektrotauchlackierung auf die Bauteile aufgebracht wird. In der Regel folgt dieser ersten Elektrotauchlackierung, insbesondere im Falle von Automobilkarosserien, die Aufbringung mehrerer weiterer Lackschichten. Für weniger anspruchsvolle Anwendungen wie beispielsweise bei Haushaltsgeräten kann nach der genannten korrosionsschützenden Oberflächenbehandlung direkt ein Pulverlack aufgebracht werden.

In der metallverarbeitenden Industrie wie beispielsweise im Fahrzeug- und Haushaltsgerätebau besteht aus Gründen der Prozeßvereinfachung der Wunsch, den Aufwand für die chemische Korrosionsschutzbehandlung zu verringern. Dies kann dadurch geschehen, daß Rohmaterial in Form von Metallblechen oder Metallbändern eingesetzt wird, das bereits mindestens eine Korrosionsschutzschicht trägt.

Es besteht daher Bedarf, einfachere Herstellungsverfahren zu finden, bei denen bereits vorbeschichtete Bleche geschweißt und in bewährter Weise elektrotauchlackiert oder pulverlackiert werden können. So gibt es eine Reihe von Verfahren, bei denen im Anschluß an eine Phosphatierung und/oder Chromatierung im sogenannten Coil-Coating-Verfahren eine mehr oder weniger leitfähige organische Beschichtung aufgebracht wird. Dabei sollen diese organischen Beschichtungen in der Regel so beschaffen sein, daß sie genügende elektrische Leitfähigkeit besitzen, um automobiltypische Schweißverfahren, beispielsweise elektrische Punktschweißverfahren, nicht zu beeinträchtigen. Außerdem sollen diese Beschichtungen mit herkömmlichen Elektrotauchlacken beschichtbar sein.

Insbesondere in der Automobilindustrie werden dabei in neuerer Zeit neben normalen Stahlblechen vermehrt auch die nach den verschiedensten Verfahren verzinkten und/oder legierungsverzinkten Stahlbleche und/oder Aluminiumbleche eingesetzt.

Die Beschichtung von Stahlblechen mit organischen Beschichtungen, die schweißbar sind und die direkt im Walzwerk nach dem sogenannten Coil-Coating-Verfahren aufgebracht werden, ist im Prinzip bekannt.

So beschreibt die DE-C-3412234 einen leitfähigen und schweißbaren Korrosionsschutzprimer für elektrolytisch dünnverzinktes, phosphatiertes oder chromatiertes und verformbares Stahlblech. Dieser Korrosionsschutzprimer besteht aus einer Mischung von über 60 % Zink, Aluminium, Graphit und/oder Molybdändisulfid sowie einem weiteren Korrosionsschutzpigment und 33 bis 35 % eines organischen Bindemittels sowie etwa 2 % eines Dispergierhilfsmittels oder Katalysators. Als organisches Bindemittel werden Polyesterharze und/oder Epoxidharze sowie deren Derivate vorgeschlagen. Es wird angenommen, daß diese Technologie die Grundlage des in der Industrie unter dem Namen "Bonazinc® 2000" bekannten Beschichtungsmittels darstellt. Obwohl dieses Verfahren bereits einige Vorzüge gegenüber der eingangs geschilderten Vorgehensweise - vorübergehender Korrosionsschutz mit Korrosionsschutzölen, gefolgt von nachträglicher Entfettung nach dem Zusammenfügen der metallischen Bauteile - bietet, ist das in der DE-C-3412234 beschriebene Verfahren noch stark verbesserungsbedürftig:
- Die Beschichtung ist nicht ausreichend punktschweißbar.
- Die Einbrenntemperatur für derartige Beschichtungen liegt mit 250 bis 260 °C Peak Metal Temperature (PMT) noch zu hoch. Viele neuartige Stähle mit "Bake-Hardening"-Effekt können für derartig hohe Einbrenntemperaturen nicht eingesetzt werden.

Gemäß der Lehre der DE-C-3412234 kann das organische Bindemittel aus Polyesterharzen und/oder Epoxidharzen sowie deren Derivaten bestehen. Konkret genannt werden ein Epoxid/Phenyl-Prekondensat, ein Epoxyester sowie lineare ölfreie Mischpolyester auf Basis Terephthalsäure.

Die EP-A-573015 beschreibt ein organisch beschichtetes Stahl-Verbundblech bestehend aus einer ein- oder zweiseitig mit einer Zink oder Zinklegierung beschichteten Oberfläche, die mit einem Chromatfilm versehen ist, und einer darauf befindlichen organischen. Beschichtung mit einer Schichtstärke von 0,1 bis 5 µm. Die organische Beschichtung ist aus einer Primer-Zusammensetzung gebildet, die aus einem organischen Lösungsmittel, einem Epoxidharz mit einem Molekulargewicht zwischen 500 und 10.000, einem aromatischen Polyamin und einer Phenol- oder Cresolverbindung als Beschleuniger besteht. Weiterhin enthält die Primer-Zusammensetzung ein Polyisocyanat sowie kolloidale Kieselsäure. Gemäß der Lehre dieser Schrift wird die organische Beschichtung vorzugsweise in einer Trockenfilm-Schichtstärke von 0,6 bis 1,6 µm aufgebracht, da dünnere Schichten als 0,1 µm zu dünn sind um Korrosionsschutz zu bewirken. Schichtstärken über 5 µm beeinträchtigen jedoch die Schweißbarkeit. In analoger Weise beschreibt die DE-A-3640662 ein oberflächenbehandeltes Stahlblech, umfassend ein zinküberzogenes oder mit einer Zinklegierung überzogenes Stahlblech, einem auf der Oberfläche des Stahlbleches gebildeten Chromatfilm und einer auf dem Chromatfilm gebildeten Schicht einer Harzzusammensetzung. Diese Harzzusammensetzung besteht aus einem basischen Harz, das durch Umsetzung eines Epoxidharzes mit Aminen hergestellt wird, sowie einer Polyisocyanatverbindung. Auch dieser Film darf nur in Trockenfilmstärken von kleiner als etwa 3,5 µm aufgebracht werden, weil bei höheren Schichtstärken die Schweißfähigkeit stark herabgesetzt ist.

Die EP-A-380 024 beschreibt organische Beschichtungsmaterialien auf der Basis eines Bisphenol-A-Typ-Epoxidharzes mit einem Molekulargewicht zwischen 300 und 100.000 g/mol sowie einem Polyisocyanat bzw. blockiertem Polyisocyanat, pyrogener Kieselsäure sowie mindestens einem organischen Farbpigment. Auch bei diesem Verfahren ist eine chromathaltige Vorbehandlung mit hoher Cr-Auflage erforderlich. Dabei darf die organische Schicht nicht dicker als 2 µm sein, da die Bleche mit dickeren organischen Schichten sich nicht befriedigend punktschweißen lassen und die Eigenschaften des auf die organische Beschichtung aufgebrachten Elektrotauchlackes negativ beeinflußt werden.

Die WO 99/24515 offenbart eine leitfähige und schweißbare Korrosionsschutz-Zusammensetzung zur Beschichtung von Metalloberflächen, dadurch gekennzeichnet, daß sie
a) 10 bis 40 Gew.-% eines organischen. Bindemittels enthaltend
   aa) mindestens ein Epoxidharz
   ab) mindestens einen Härter ausgewählt aus Guanidin, substituierten Guanidinen, substituierten Harnstoffen, cyclischen tertiären Aminen und deren Mischungen
   ac) mindestens ein blockiertes Polyurethanharz
b) 0 bis 15 Gew.-% eines Korrosionsschutzpigments auf Silicatbasis
c) 40 bis 70 Gew.-% pulverförmiges Zink, Aluminium, Graphit und/oder Molybdänsulfid, Ruß, Eisenphosphid
d) 0 bis 30 Gew.-% eines Lösungsmitttels enthalten.

WO 03/089530 beschreibt ein Gemisch zum Aufbringen eines polymeren korrosionsbeständigen elektrisch schweißbaren Überzuges, dessen elektrisch leitfähige Partikel eine elektrische Leitfähigkeit haben sollen, die besser ist als die der Partikel aus reinem Zink. Fernerhin sollen diese leitfähigen Partikel eine Mohs'sche Härte von größer als 4 aufweisen. Gemäß der Lehre dieser Schrift kann in der Zusammensetzung ein Photoinitiator anwesend sein. Sie kann ebenfalls Wasser und/oder ein organisches Lösungsmittel enthalten. Weiterhin lehrt diese Schrift, dass solche Überzugs-Zusammensetzungen, die reich an Zink-Partikeln sind, als Schweißprimer-Beschichtungen nicht wünschenswert sind, da die Presswerkzeuge aufgrund des Abriebes stark verschmutzen würden.

WO 03/062328 beschreibt korrosionshemmende Mischungen enthaltend korrosionshemmende Pigmente, amorphes Siliciumdioxid, das mit Metallionen modifiziert ist, so wie Verbindungen der allgemeinen Formel Mₙ (X)ₘ, worin M mindestens ein Zentralatom aus der Gruppe der Lewis-Akzeptoren und X Lewis-Donoren-Liganden sind, die mindestens ein Brückenatom aus Elementen der 5. oder 6. Hauptgruppe des periodischen Systems der Elemente enthalten. Die eingesetzten Bindemittel sollen dabei vorzugsweise (Meth)Acrylat-(Co)polymerisate, partiell verseifte Polyvinylester, Polyester, Alkyd-Harze, Polylactone, Polycarbonate, Polyether, Epoxidharz-Amin-Addukte, Polyharnstoffe, Polyamide, Polyimide oder Polyurethane sein. Diese Schrift offenbart weiterhin, dass die Beschichtungsstoffe mit aktinischer Strahlung, insbesondere mit UV-Strahlung, vernetzt werden können oder gemeinsam mit Hitze vernetzt werden. Sie eignen sich für den Einsatz im Coil-Coating-Verfahren.

WO 00/75250 beschreibt ein Verfahren zum Aufbringen eines schweißbaren Korrosionsschutzüberzuges auf eine metallische Unterlage, insbesondere ein Karosserieblech für die Automobilindustrie, sowie Beschichtungsgemische zur Durchführung dieses Verfahrens. Das Beschichtungsgemisch soll ein festes polymeres organisches Bindemittel, eine niedermolekulare flüssige, radikalisch polymerisierbare Verbindung und eine bei Einwirkung von aktinischer Strahlung Radikale bildende Verbindung enthalten. Weiterhin soll diese Zusammensetzung ein leitfähiges anorganisches Pigment aus der Gruppe der Oxide, Phosphate oder Phosphide von Eisen oder Aluminium oder Graphit-Glimmerpigmenten enthalten. Nach der Lehre dieser Schrift sind Beschichtungsgemische, die Zinkpulver enthalten, unvorteilhaft, da sie häufig zu Korrosionserscheinungen neigen, die zwischen der pigmentierten Schicht und der metallischen, ggf. verzinkten Unterlage einsetzt.

WO 03/089507 und WO 03/089529 beschreiben Beschichtungsgemische zum Aufbringen eines dünnen polymeren, korrosionsbeständigen, verschleißarm umformbaren und, elektrisch leitfähigen Überzugs auf eine metallische Unterlage. Diese Zusammensetzungen sollen mindestens ein Bindemittel sowie ggf, einen Reaktivverdünner und mindestens einen Vernetzer und/oder mindestens einen Photoinitiator sowie ggf. eine nachvernetzende Verbindung wie z.B. Isocyanate, blockierte Isocyanate, Isocyanurate und dergleichen sowie ein organisches Lösungsmittel und/oder Wasser enthalten. Weiterhin soll das Gemisch elektrisch leitfähige und/oder halbleitende Elemente/Verbindungen enthalten, die eine Partikelgrößenverteilung mit einem d₈₀-Durchgangswert von < 6 µm aufweisen, alternativ werden elektrisch leitfähige und/oder halbleitende Polymere Verbindungen wie z.B. Polyaniline oder elektrisch leitfähige oder halbleitende Amin- und/oder Ammonium-haltige Verbindungen vorgeschlagen. Alternativ werden Mischungen aus elektrisch leitfähigen harten Partikeln und sehr weichen oder weichen anorganischen, gleitfähigen, elektrisch leitfähigen oder halbleitfähigen Partikeln als Pigment-Anteile vorgeschlagen. Konkret genannt werden für die gleitfähigen, sehr weichen oder weichen Partikel: Graphit, Sulfid, Selenid und/oder Tellurid.

Es bestand die Aufgabe, verbesserte Beschichtungszusammensetzungen bereitzustellen, die den Anforderungen der Automobilindustrie in allen Punkten genügen. Im Vergleich zum bekannten Stand der Technik sollen die für das Coil-Coating-Verfahren geeigneten organischen Beschichtungszusammensetzungen in zumindest einigen der folgenden Eigenschaften verbessert werden:
- deutliche Reduzierung des Weiß- und Rotrostes auf verzinktem Stahlblech im Salzsprühtest nach DIN 50021, d.h. besserer Korrosionsschutz
- Verbesserung der Haftung der organischen Beschichtung auf dem metallischen Substrat gemäß einer Bewertung nach dem T-Bend-Test (ECCA-Norm) und Impact-Test (ECCA-Norm)
- Außenhautfähigkeit (d.h. Verwendbarkeit als Außenblech einer Automobilkarosse)
- ausreichender Korrosionsschutz auch bei Cr-freien Vorbehandlungs-Verfahren.
- eine heute noch übliche Hohlraumversiegelung mit Wachs oder wachshaltigen Produkten kann wegen des verbesserten Korrosionsschutzes überflüssig werden
- ausreichende Eignung für automobiltypische Schweißverfahren
- Restistenz gegenüber den bei der Automobilherstellung eingesetzten Prozesschemikalien
- Überlackierbarkeit.

Damit diese Beschichtungen im Coil-Coating-Verfahren aufbringbar sind, müssen sie eine geeignete Viskosität aufweisen. Bei hochpigmentierten Systemen erfordert dies üblicherweise die Anwesenheit von Lösungsmitteln wie Wasser oder organischen Lösungsmitteln, die beim Aushärten der Beschichtung abdampfen. Im Falle von Wasser erfordert dies einen zusätzlichen Energieaufwand, bei organischen Lösungsmitteln zusätzlich technische Maßnahmen, um diese nicht in die Atmosphäre gelangen zu lassen.

Die vorliegende Erfindung betrifft in einem ersten Aspekt eine elektrisch leitfähige und schweißbare, im wesentlichen lösungsmittelfreie Korrosionsschutz-Zusammensetzung zur Beschichtung von Metalloberflächen, dadurch gekennzeichnet, dass sie, bezogen auf die Gesamtzusammensetzung,
a) 5 bis 98 Gew.-% eines organischen Bindemittels,
b) 0 bis 15 Gew.-% eines Korrosionsschutzpigments,
c1) 20 bis 90 Gew.-% eines Leitfähigkeitspigments mit einer Dichte von mindestens 3 g/cm³, vorzugsweise ausgewählt aus jeweils pulverförmigem Zink, Eisen, Edelstahl, Molybdändisulfid, und Phosphiden und Oxiden des Eisens, die einzeln oder im Gemisch vorliegen können, wobei in diesem Fall der Mengenanteil an organischem Bindemittel a) maximal 80 Gew.-% beträgt, und/oder
c2) 2 bis 20 Gew.-% eines Leitfähigkeitspigments mit einer Dichte unterhalb von 3 g/cm³, vorzugsweise ausgewählt aus Aluminium, Ruß und Graphit
sowie erwünschtenfalls bis zu 50 Gew.-% weitere Wirk- oder Hilfsstoffe enthält,
wobei sich die Anteile der Komponenten zu 100 % addieren,
wobei die Zusammensetzung eine Viskosität, gemessen bei der Applikationstemperatur mit einem DIN-Becher mit einer 4 mm-Auslaufdüse, im Bereich von 10 bis 120 Sekunden, vorzugsweise im Bereich von 30 bis 90 Sekunden aufweist. Derartige Beschichtungsmittel sind zur Anwendung im Coil-Coating-Verfahren geeignet.

Als elektrisch leitfähig im Sinne dieser Erfindung soll eine Beschichtung verstanden werden, die nach dem Aushärten unter den üblichen Bedingungen der Fügetechnik in der Automobilindustrie schweißbar, vorzugsweise nach dem Punktschweißverfahren schweißbar, ist. Weiterhin besitzen diese Beschichtungen eine ausreichende elektrische Leitfähigkeit, um eine vollständige Abscheidung von Elektrotauchlackierungen zu gewährleisten.

Als "im wesentlichen lösungsmittelfrei" im Sinne dieser Erfindung soll eine Korrosionsschutz-Zusammensetzung verstanden werden, die allenfalls Lösungsmittelreste bzw. Spuren aus den Herstellungsprozessen der Vorprodukte enthalten. In der Regel sind, auch bei Kombination mehrerer kommerziell erhältlicher Bindemittelkomponenten, die Lösungsmittelreste deutlich unter etwa 5 Gew.-% der Gesamtzusammensetzung, vorzugsweise sogar deutlich unter etwa 1 Gew.-% der Gesamtzusammensetzung. Als Lösungsmittel im Sinne dieser Erfindung gelten Wasser sowie organische Lösungsmittel, nicht jedoch die weiter unten näher beschriebenen Reaktivverdünner, die beim Aushärten in die Beschichtung mit eingebaut werden. Demgegenüber sind Lösungsmittel dadurch gekennzeichnet, dass sie beim Aushärten der Beschichtung verdampfen.

Die Viskosität der erfindungsgemäßen Mittel wird hierbei, wie in der Lacktechnik gebräuchlich, nach DIN 53211 mit einem DIN-Auslaufbecher mit einem Durchmesser der Auslauf-Düse von 4mm gemessen. Dabei bestimmt man die Zeit, die eine bestimmte Menge des Mittels zum Auslaufen aus dem Becher benötigt. Je größer die Viskosität, desto länger ist diese Zeit.

Dabei ist es bevorzugt, dass das organische Bindemittel durch Einwirkung von energiereicher Strahlung (= Strahlung, deren Quanten mindestens eine so große Energie haben wie die Quanten von sichtbarem Licht, d.h. sogenannte "aktinische Strahlung", d.h. Strahlung, die eine photochemische Reaktion auslösen kann), wie zum Beispiel von sichtbarem Licht, UV-Strahlung, Elektronenstrahlung oder γ-Sitrahlung vernetzt werden kann. Die Elektronenstrahlung soll Energiewerte zwischen 150 und 500 keV aufweisen. Bevorzugt ist eine Vernetzung durch elektromagnetische Strahlung, insbesondere mit einer Wellenlänge von 150 bis zu 800 nm, besonders bevorzugt zwischen 200 und 600 nm (UV- und sichtbare Strahlung). Entsprechende Strahlungsquellen sind dem Fachmann bekannt. Die Strahlungsintensität und die Dauer der Bestrahlung hängen von der Art der Strahlungsquelle und von den Verfahrensbedingungen ab, z.B. Abstand der Strahlungsquelle oder relative Bewegung zwischen Quelle und Substrat. Die Dauer liegt jedoch im allgemeinen unter 60 sec, bevorzugt zwischen 0,001 und 30 sec. Die jeweiligen Anlagenparameter können vom Fachmann durch einfache Anpassung bestimmt werden.

Damit das organische Bindemittel diese Eigenschaft aufweist, enthält es vorzugsweise
aa) mindestens ein radikalisch polymerisierbares Harz, vorzugsweise ein Polyester-, Urethan- oder epoxy-modifiziertes (Meth)acrylatharz, oder eine Mischung hierzu,
ab) mindestens einen Reaktivverdünner,
ac) mindestens einen Photoinitiator.

Das organische Bindemittel a) ist vorzugsweise so zusammengesetzt, dass es, bezogen auf die Gesamtmenge des organischen Bindemittels,
2 bis 80 Gew.-% der Komponente aa),
4 bis 95 Gew.-% der Komponente ab) und
0,1 bis 10 Gew.-% der Komponente ac)
enthält, wobei sich die Mengenanteile zu 100 % addieren.

Ein bevorzugter Bestandteil des organischen Bindemittels (Komponente a) der erfindungsgemäßen Korrosionsschutz-Zusammensetzungen ist das (Meth)acrylatharz (aa). Dieses (Meth)acrylatharz enthält polymerisierbare ungesättigte Doppelbindungen enthaltende Oligomere, wie beispielsweise Polyester- oder Polyetheroligomere mit seitenständigen oder endständigen (Meth)acrylgruppen, oder bevor-. zugt (Meth)acrylat-funktionelle aliphatische, cycloaliphatische und/oder aromatische Epoxidverbindungen oder Polyurethanoligomere mit reaktiven (Meth)-acrylatgruppen. Diese Oligomere sollen mindestens zwei funktionelle ungesättigte Doppelbindungen aufweisen und haben im allgemeinen ein Molekulargewicht zwischen 500 und 100.000. Sie sind kommerziell erhältlich. Ihr Mengenanteil bezogen auf die Gesamt-Zusammensetzung beträgt vorzugsweise 1 bis 50 Gew.-%, wobei auch Gemische verschiedener Oligomere möglich sind.

Weiterhin soll in dem Bindemittel als Komponente ab) vorzugsweise mindestens ein mono-, di-, tri- oder poly-funktionelles ungesättigtes niedermolekulares (Meth)acrylat enthalten sein, wobei einzelne Verbindungen oder Gemische vorliegen können. Diese niedermolekularen (Meth)acrylatverbindungen sind niedrig in ihrer Viskosität und dienen dabei als Reaktivverdünner, der in die Bindemittelmatrix mit einpolymerisiert wird. Beispiele für solche Verbindungen sind: ggf. alkoxylierte Alkandiol- oder Alkantriol(meth)acrylate wie 1,3-Butylenglykoldi(meth)acrylat, 1,4-Butandioldi(meth)acrylat, 1,6-Hexandiol-di(meth)acrylat, Trialkylenglykol-di(meth)acrylat, Polyalkylenglykoldi(meth)acrylat, Tetraalkylenglykol-di(meth)acrylat, Neopentylglykoldi(meth)acrylat, Glycerinalkoxy tri(meth)acrylat, alkoxyliertes Neopentylglykoldi(meth)acrylat; (Meth)acryl-Epoxid- verbindungen, wie Bisphenol-A-Epoxid-di(meth)acrylat; Polyhydroxy(meth) acrylate wie Pentaerythritoltri(meth)acrylat, Trimethylolpropantri(meth)acrylat, Trisalkoxy-Trimethylolpropantri(meth)acrylat, Di-trimethylolpropantetra(meth) acrylat, Pentaerythritoltetra(meth)acrylat, Tris-(2-hydroxyalkyl)isocyanurat-tri(meth)acrylat, Di-pentaeythritoltetra(meth)acrylat, Dipentaerythritolpenta(meth)acrylat, Dipentaerythritolhexa(meth)acrylat, wobei alkylen ethylen, propylen oder butylen und alkoxy, ethoxy, 1,2- oder 1,3-propoxy oder 1,4-butoxy bedeuten.

Als monofunktionelle Acrylatverbindungen können beispielsweise die folgenden (Meth)acrylate verwendet werden: lineare, verzweigte oder cyclische Alkyl (meth)acrylate wie n-/iso-Alkyl(meth)acrylat, Cyclohexyl(meth)acrylat, 4-tert.-Butyl cyclohexyl(meth)acrylat, Dihydrocyclopentadienyl(meth)acrylat, Tetrahydrofurfuryl (meth)acrylat, Isobornyl(meth)acrylat, Allyl(meth)acrylat, Mono(meth)acryloylalkyl phthalat, -succinat oder -maleinat; Alkandiolmono(meth)acrylate, wie Hydroxypropyl(meth)acrylat, Polyalkylenglykol(meth)acrylat, Monoalkoxytrialkylenglykol-(meth)acrylat, 2,3-Epoxypropyl(meth)acrylat; aromatische (Meth)acrylate wie Nonylphenol(meth)acrylat, 2-Phenoxyalkyl(meth)acrylat; Acrylamide wie N,N-Dialkyl(meth)acrylamid, N,N-Dialkylaminoalkyl(meth)acrylamid. Weiterhin sind auch anteilsweise Vinylether einsetzbar, wie z.B. Vinylethylether, Vinylpropylether, Vinylisobutylether, Vinyldodecylether, Butandiol-1,4-divihylether, Diethylenglykoldivinylether, Hydroxybutylvinylether. Die monomeren Acrylatverbindungen können einzeln oder als Gemisch vorliegen, wobei die Gesamtmenge bezogen auf die Gesamt-Zusammensetzung 2 bis 75 Gew.-% betragen soll.

Als Photoinitiatoren (Komponente ac) können die bekannten bevorzugt radikalischen Initiatoren eingesetzt werden, wie beispielsweise 2-Benzyl-dimethylamino-1-(4-morpholinophenyl)-butanon-1, Benzildimethylketal-dimethoxyphenylacetophenon, α-Hydroxybenzylphenylketon, 1-Hydroxy-1-methylethyl-phenylketon, Oligo-2-Hydroxy-2-methyl-1-(4-(1-methylvinyl)phenyl)propanon, Benzophenon, Methyl-orthobenzoylbenzoat, Methylbenzoylformat, 2,2-Diethoxyacetophenon, 2,2-di-sec. Butoxyacetophenon, p-Phenylbenzophenon, 2-Isopropylthioxanthon, 2-Methyl-anthrachinon, 2-Ethylanthrachinon, 2-Chloranthrachinon, 1,2-Benzanthrachinon, Benzil, Benzoin, Benzoinmethylether, Benzoinisopropylether, α-Phenylbenzoin, Thioxanthon, Diethylthioxanthon, 1,5-Acetonaphthalin, 1-Hydroxycyclohexyl-phenylketon, Ethyl-p-dimethylaminobenzoat. Diese können einzeln oder im Gemisch verwendet werden oder mit weiteren Radikalinitiatoren vom Peroxidtyp oder aminischen Beschleunigern kombiniert werden. Die Menge an Photoinitiator bezogen auf die Gesamt-Zusammensetzung beträgt vorzugsweise 0,1 bis 5 Gew.-%.

Als Komponente b) können Korrosionsschutzpigmente und/oder Korrosionsinibitoren in einer Menge von bis zu 15 Gew.-% vorliegen. Vorzugsweise enthält die Zusammensetzung 2 bis 10 Gew.-% Korrosionsschutzpigmente und/oder Korrosionsinibitoren, ausgewählt aus dotierter Kieselsäure, Silicaten zweiwertiger Metalle, Aluminium- und Zinkphosphaten und Modifikationsprodukten hiervon, oberflächenmodifiziertem Titandioxid, Alkoxytitanaten, Silanen, Benzthiazolderivaten, Zink- oder Calciumgluconaten, Salizylsäurederivaten und Phosphorsäureester alkoxylierter Zellulose ("Zellulosephosphat").

Das Mittel enthält als Leitfähigkeitspigment c) ein Pulver einer elektrisch leitfähigen Substanz oder eines Substanzgemisches, das es erlaubt, die beschichteten Metalloberflächen elektrisch zu verschweißen und elektrophoretisch zu lackieren, beispielsweise durch kathodische Elektrotauchlackierung. Die elektrisch leitfähige Substanz ist vorzugsweise ausgewählt aus jeweils pulverförmigem Zink, Aluminium, Eisen, Edelstahl, Graphit, Molybdändisulfid, Ruß und Phosphiden und Oxiden des Eisens, die einzeln oder im Gemisch vorliegen können. Das Leitfähigkeitspigment hat vorzugsweise eine mittlere Korngröße von nicht mehr als 10 µm. Vorzugsweise liegt die mittlere Korngröße im Bereich von 1 bis 8 µm. Derartige Pulver sind kommerziell erhältlich. Für die Bestimmung der Korngröße stehen bekannte Methoden wie beispielsweise Lichtstreuung oder Elektronenmikroskopie zur Verfügung.

Besonders bevorzugtes Leitfähigkeitspigment c) ist dabei pulverförmiges Zink, Graphit, Eisenphosphid, Eisenoxid oder eine Mischung der vorgenannten leitfähigen Substanzen ggf. in Kombination mit Molybdänsulfid. Dabei kann das pulverförmige Zink einer (vorzugsweise chromfreien) Oberflächenbehandlung unterzogen worden sein, wie sie für die Behandlung von Zinkoberflächen im Stand der Technik bekannt ist. Die Pigmente können auch mit substratspezifischen Substanzen an der Oberfläche chemisch modifiziert werden, um so einen besseren Korrosionsschutz, eine verbesserte Leitfähigkeit, eine verbesserte Schmierwirkung für die Umformung oder ein verbessertes Dispergierverhalten (d.h. Vermeiden des Absetzens) zu erzielen. Insbesondere bei Verwendung von Zink kann durch Passivierung des Zinkpulvers dessen Korrosion (Weißrostbildung) vermindert werden, so dass die elektrische Leitfähigkeit der Beschichtung und damit die Schweißbarkeit über einen längeren Zeitraum erhalten bleibt.

Die erforderliche Menge an Leitfähigkeitspigmenten hängt in erster Linie von dessen Dichte ab, da die Korrosionsschutz-Beschichtung eine solche Menge an elektrisch leitfähigen Partikeln enthalten muß, dass sich Leitfähigkeitspfade durch die Beschichtung hindurch ausbilden. Je höher die Dichte der elektrisch leitfähigen Partikel ist, desto größer ist ihr Massenanteil an der Beschichtung, um solche Leitfähigkeitspfade zu bilden. Das Gewichtsverhältnis von Leitfähigkeitspigment zu organischem Bindemittelsystem wird also umso größer sein, je größer die Dichte des Leitfähigkeitspigments ist. Dabei kann bei Verwendung von Leitfähigkeitspigmenten mit einer Dichte D von mindestens 3 g/cm³ als Regel gelten, dass für den Fall, dass nur ein einziges Leitfähigkeitspigment anwesend ist, der Gewichtsanteil x_{L} des Leitfähigkeitspigments an der Gesamtzusammensetzung, ausgedrückt als Dezimalbruch, im Bereich von (0,09 bis 0,13)•D liegt, wobei D die Dichte des Leitfähigkeitspigments in g/cm³ bedeutet, mit der Bedingung, dass dieser Gewichtsanteil x_{L} im Bereich von 0,2 bis 0,9 liegt. Man kann also den bevorzugten Gewichtsanteil des Leitfähigkeitspigments an der Gesamtzusammensetzung, ausgedrückt als Dezimalbruch (der durch Multiplikation mit 100 den Anteil in Gewichtsprozent ergibt), dadurch ermitteln, dass dessen Dichte D, ausgedrückt in g/cm³, mit einer Zahl im Bereich von 0,09 bis 0,13 multipliziert. Liegt eine Mischung unterschiedlicher Leitfähigkeitspigmente mit einer Dichte D von mindestens 3 g/cm³ vor, so gilt entsprechend, dass die Summe Σ(x_{L(i)}) der Gewichtsanteile aller Leitfähigkeitspigmente (x_{L(i)}) an der Gesamtzusammensetzung, ausgedrückt als Dezimalbruch, im Bereich von Σ[(0,09 bis 0,13)•Dᵢ•aᵢ] liegt, wobei Dᵢ die Dichte des i-ten Leitfähigkeitspigments in g/cm³ und aᵢ den Bruchteil der Gewichtsmenge des i-ten Leitfähigkeitspigments an der Gesamt-Gewichtsmenge aller Leitfähigkeitspigmente bedeuten, mit der Bedingung, dass die Summe Σ(x_{L(i)}) der Gewichtsanteile aller Leitfähigkeitspigmente (x_{L(i)}) an der Gesamtzusammensetzung, ausgedrückt als Dezimalbruch, im Bereich von 0,2 bis 0,9 liegt.

Leitfähigkeitspigmente mit einer Dichte von unterhalb von 3 g/cm³ wie beispielsweise Ruß, Graphit und Aluminium neigen dazu, beim Dispergieren in organischen Harzmischungen zu einem thixotropen Verhalten zu führen. Bei starker Ausprägung kann dies für die hier vorgesehene Anwendung nachteilig sein. Daher setzt man solche Leitfähigkeitspigmente in geringeren Mengenanteilen ein, als es gemäß obiger Formel für schwerere Leitfähigkeitspigmente der Fall ist. Leitfähigkeitspigmente mit einer Dichte unterhalb von 3 g/cm³ verwendet man in einem Anteil von 2 bis 20 Gew.-% bezogen auf die Gesamtzusammensetzung. Im Falle von Ruß oder Graphit wählt man als maximale Menge einen Wert zwischen 12 und 15 Gew.-%, während bei Verwendung von pulverförmigen Aluminium ein Mengenanteil von etwa 20 Gew.-% eine praktische Obergrenze darstellt.

Man kann auch Mischungen von Leitfähigkeitspigmenten verwenden, die Pigmente mit einer Dichte von mindestens 3 g/cm³ und solche mit einer Dichte von darunter enthalten. Ein Beispiel hierfür ist eine Mischung von Zink und Ruß oder Graphit. In diesem Fall gilt für das Leitfähigkeitspigment mit einer Dichte von unterhalb von 3 g/cm³ die vorstehende Bedingung, wobei Mengenanteile im Bereich von 2 bis 10 Gew.-% bezogen auf die Gesamtzusammensetzung ausreichen können. Es ist dann nicht erforderlich, dass das Leitfähigkeitspigment oder die Mischung von Leitfähigkeitspigmenten mit einer Dichte von mindestens 3 g/cm³ in einer Menge anwesend ist, die durch die vorstehend beschriebene Formel bzw. durch Anspruch 6 definiert ist. Vielmehr kann ein wesentlich geringerer Mengeanteil gewählt werden, beispielsweise im Bereich von etwa der Hälfte bis etwa ein Drittel der Menge, die sich aus der genannten Formel ergeben würde. Verwendet man beispielsweise eine Mischung von Zink und Graphit, wobei der Anteil an Graphit bezogen auf die Gesamtmenge der Korrosionsschutz-Zusammensetzung im Bereich von 3 bis 10 Gew.-% liegt, so kann der Gehalt an Zink im Bereich von 15 bis 50 Gew.-% liegen.

Vorzugsweise beträgt bei ausschließlicher Verwendung von Zink der Gehalt an Leitfähigkeitspigment c), bezogen auf die Gesamtzusammensetzung, mindestens 45 Gew.-%, insbesondere mindestens 50 Gew.-% und besonders bevorzugt mindestens 55 Gew.-%. Gehalte von 60 Gew.-% und darüber sind ebenfalls möglich und sogar noch mehr bevorzugt. Die Obergrenze des Gehalts an Leitfähigkeitspigment wird vor allem durch die Viskosität des Mittels und die Notwendigkeit einer ausreichenden Menge an organischem Bindemittel relativ zur Menge des Leitfähigkeitspigments bestimmt. Anteile an Leitfähigkeitspigment von bis zu 90 Gew.-% (jeweils bezogen auf die Gesamtzusammensetzung) sind möglich. Vorteilhafterweise begrenzt man jedoch den Gehalt an Leitfähigkeitspigment auf 80 Gew.-% und insbesondere auf 75 Gew.-%.

Logischerweise enthält die Korrosionsschutz-Zusammensetzung einen umso geringem Gewichtsanteil an organischem Bindemittel, je höher der Gewichtsanteil an Leitfähigkeitspigment ist. Hierbei gilt, dass der Gewichtsanteil x_{B} des organischen Bindemittels an der Gesamtzusammensetzung, ausgedrückt als Dezimalbruch, so gewählt wird, dass er im Bereich von [(0,5 bis 1) minus (Summe Σ(x_{L(i)}) der Gewichtsanteile aller Leitfähigkeitspigmente)] liegt. Der Gewichtsanteil des organischen Bindemittels an der Gesamtzusammensetzung, ausgedrückt als Dezimalbruch, ergibt sich zu 1 minus Gewichtsanteil der Leitfähigkeitspigmente, wenn die Korrosionsschutz-Zusammensetzung außer organischem Bindemittel und Leitfähigkeitspigment keine weiteren Komponenten enthält. Enthält die Korrosionsschutz-Zusammensetzung jedoch beispielsweise 50 Gew.-% weitere Komponenten, so dass diese weiteren Komponenten selbst einen Gewichtsanteil von 0,5 an der Gesamtzusammensetzung haben, so ergibt sich der Gewichtsanteil an organischem Bindemittel, ausgedrückt als Dezimalbruch, dadurch, dass man die Differenz 0,5 minus Gewichtsanteil der Leitfähigkeitspigmente bildet. Analog erhält man den Gewichtsanteil an organischem Bindemittel, wenn der Anteil an anderen Wirk- und Hilfsstoffen außer organischem Bindemittel und Leitfähigkeitspigment zwischen 0 und 0,5 liegt.

Zusätzlich zu dem Leitfähigkeitspigment kann das Beschichtungsmittel als weiteren Wirk- oder Hilfsstoff Pigmente oder Farbstoffe enthalten, die gut Infrarotstrahlung absorbieren und sich hierbei erwärmen (im Folgenden als "IR-Absorber" bezeichnet). Hierdurch lässt sich der Anteil an IR-Strahlung, den Licht- und UV-Strahler üblicherweise ebenfalls emittieren, im Beschichtungsmittel absorbieren und zusätzlich zum Aushärten der Beschichtung nutzen. Dies ist insbesondere empfehlenswert, wenn das Leitfähigkeitspigment nicht selbst bereits diese Eigenschaft hat. Der Anteil an zusätzlichem IR-Absorber liegt vorzugsweise bei 0,5 bis 20 Gew.-%, insbesondere bei 1 bis 10 Gew.-% bezogen auf die Gesamtzusammensetzung des Beschichtungsmittels. Beispiele hierfür sind:
a) typische Schwarzpigmente wie Graphit, Ruß, Aktivkohle, gemischtvalente Mn- und Fe-Oxide und
b) IR-absorbierende Pigmente und Farbstoffe, wie Cyanin- und Phthalocyanin-Derivate, z.B. Cu-hexadeca(phenylthio)phthalocyanin oder Metalloxyphthalocyanine, Nickel-dithiolenkomplexe, Azaannulen-Farbstoffe, alkylierte Naphthalocyanine, 1,4,5,8-Tetrakis(arylanilino)anthrachinone, aminosubstituierte Fluorene, (Nah)IR-absorbierende Farbstoffe auf Basis von Diimmonium- oder Pyrylium-Salzen, Perylentetracarbonsäurediimid-Verbindungen, Thiophenotribenzoporphyrazin und Derivate davon.

Als fakultative weitere Wirk- oder Hilfsstoffe kann die Zusammensetzung einen oder mehrere Stoffe ausgewählt aus Antiabsetzmitteln, Entschäumern, Entgasungsmitteln, Dispergierhilfsmitteln, Mattierungsmitteln, Umformhilfen und Farbstoffen enthalten.

Ein besonderer Vorteil der erfindungsgemäßen Zusammensetzung besteht darin, dass die organische Bindemittelkomponente frei sein kann von monomeren Isocyanatverbindungen oder Verbindungen mit freien oder latenten/verkappten Isocyanatgruppen. Hierdurch werden zum einen die mit der Verwendung von Isocyanaten verbundenen gesundheitlichen Risiken vermieden, zum anderen entfällt hierdurch ein zweiter, isocyanat-spezifischer Härtungsschritt. Fernerhin sind die erfindungsgemäßen Zusammensetzungen im wesentlichen (wie weiter oben erläutert) frei von Wasser, Lösungsmitteln und sonstigen leicht flüchtigen Bestandteilen, die während des Aushärtungsvorganges energieaufwendig verdampft werden müssen und in arbeitshygienisch einwandfreier Weise entweder verbrannt oder im Kreislauf geführt werden müssen.

Das erfindungsgemäße Beschichtungsmittel ist besonders dafür geeignet, im sogenannten Coil-Coating-Verfahren eingesetzt zu werden. Hierbei werden Metallbänder kontinuierlich beschichtet. Das Mittel kann dabei nach unterschiedlichen Verfahren aufgetragen werden, die im Stand der Technik geläufig sind. Beispielsweise können Auftragswalzen verwendet werden, mit denen sich direkt die erwünschte "Nassfilmdicke" (= Dicke der flüssigen Beschichtung vor dem Aushärten) einstellen läßt. Alternativ hierzu kann man das Metallband in das Mittel eintauchen oder es mit dem Mittel besprühen und gegebenenfalls die erwünschte Nassfilmdicke durch Abquetschwalzen einstellen.

Sofern Metallbänder beschichtet werden, die unmittelbar zuvor mit einer Metallauflage, beispielsweise mit Zink oder Zinklegierungen elektrolytisch oder im Schmelztauchverfahren überzogen wurden, ist eine Reinigung der Metalloberflächen vor dem Auftragen des Mittels nicht erforderlich. Sind die Metallbänder jedoch bereits gelagert worden und insbesondere mit Korrosionsschutzölen versehen, ist ein Reinigungsschritt notwendig. Das erfindungsgemäße Mittel kann unmittelbar auf die gereinigte oder aufgrund des Herstellprozesses blanke Metalloberfläche aufgetragen werden. Die erzielbare Korrosionsschutzwirkung sowie die Haftung der Beschichtung auf der Metalloberfläche lassen sich jedoch verbessern, wenn man die Metalloberfläche vor dem Auftragen des Mittels einer Korrosionsschutz-Vorbehandlung mit Reagenzien unterzieht, wie sie im Stand der Technik als "Konversionsbehandlung" bekannt ist. Beispielsweise kann es sich hierbei um eine Phosphatierung handeln, insbesondere eine schichtbildende Zinkphosphatierung oder eine Konversionsbehandlung mit chromfreien Behandlungsmitteln, beispielsweise auf Basis komplexer Fluoride von Titan und/oder Zirkon und/oder polymeren organischen Komplexbildnern. Derartige Vorbehandlungsverfahren sind im Stand der Technik bekannt.

In besonders bevorzugter Ausführungsform der vorliegenden Erfindung wird der vorgenannten Vorbehandlungslösung eine niedermolekulare Verbindung (= eine Verbindung mit einer Molmasse von höchstens 700 g/mol zugesetzt, die mindestens eine durch radikalische Polymerisation vernetzbare Gruppe und mindestens eine H-aktive Gruppe enthält. Derartige radikalisch vernetzbare niedermolekulare Verbindungen sind beispielsweise ungesättigte Carbonsäuren oder ungesättigte Carbonamide, insbesondere Acrylsäure, Methacrylsäure, Acrylamid, Methacrylamid. Es können jedoch auch acrylat- oder methacrylatfunktionelle Sulfonsäuren oder Phosphorsäure oder Phosphonsäureverbindungen oder deren Derivate eingesetzt werden. Diese polymerisierbaren niedermolekularen Verbindungen werden in Mengen zwischen 0,1 bis 40 Gew.-%, vorzugsweise zwischen 0,1 und 20 Gew.-% (Bezogen auf die Gesamtzusammensetzung der Lösung) einer an sich bekannten Vorbehandlungslösung oder einem Lösungsmittel wie beispielsweise Wasser zugesetzt. Dabei enthält die so modifizierte Vorbehandlungslösung keine Polymerisationsinitiatoren.

Der Zusatz der vorgenannten niedermolekularen, radikalisch polymerisierbaren Verbindungen zu der Vorbehandlungslösung bewirkt eine besonders effektive Haftvermittlung zwischen dem derartig vorbehandelten metallischen Substrat und der nachfolgend aufgetragenen leitfähigen und schweißbaren Korrosionsschutz-zusammensetzung. Nachfolgend werden derartige haftvermittelnde, niedermolekulare, polymerisierbare Verbindungen vereinfachend "polymerisierbare Haftvermittler" genannt.

Es ist jedoch nicht zwingend erforderlich, dass die Vorbehandlungslösung außer den genannten polymerisierbaren Haftvermittlern weitere Komponenten enthält, die im Sinne einer Konversionsbehandlung mit der Metalloberfläche reagieren. Vielmehr kann die Vorbehandlungslösung (außer gegebenenfalls Lösungsmittel wie beispielsweise Wasser und gegebenenfalls Reagenzien zum Einstellen des bevorzugt sauren pH-Werts von beispielsweise 1 bis 4) als reaktive Wirkstoffe, die auf der Metalloberfläche verbleiben, ausschließlich die polymerisierbaren Haftvermittler enthalten. Dies kann insbesondere dann der Fall sein, wenn die Korrosionsschutzzusammensetzung als Leitfähigkeitspigment c) pulverförmiges Zink oder Aluminium enthält, das seinerseits einer Konversionsbehandlung unterzogen wurde.

Die Vorbehandlungslösung, die die genannten polymersierbaren Haftvermittler enthält, kann zusätzlich UV-härtbare Polymere wie beispielsweise Polyacrylate, Polyurethane oder Polyester enthalten, die noch polymerisierbare Doppelbindungen aufweisen. Hierdurch kann die Haftung zwischen der anschließend aufgetragenen erfindungsgemäßen Korrosionsschutz-Zusammensetzung und der Metalloberfläche weiter verbessert werden. Weiterhin kann diese Vorbehandlungslösung zusätzlich elektrisch leitfähige Pigmente enthalten, die bei der Vorbehandlung auf der Metalloberfläche verbleiben. Hierdurch verringert sich der elektrische Widerstand zwischen der nachfolgend aufgetragenen erfindungsgemäßen Korrosionsschutz-Zusammensetzung und der Metalloberfläche, wodurch sich die Schweißbarkeit mit Elektroschweißen verbessert.

Die Vorbehandlungslösung wird in an sich bekannter Weise auf das vorzubehandelnde Blech aufgetragen. Der Auftrag kann z.B. mit einem sogenannten Chemcoater oder durch Walzenauftrag oder Sprühauftrag sowie durch Tauchen oder Fluten erfolgen. Nach dem Trocknen kann unmittelbar im Anschluss daran die im wesentlichen lösungsmittelfreie Korrosionsschutz-Zusammensetzung aufgetragen werden. Das vorbehandelte Blech kann aber auch gelagert werden, bevor die erfindungsgemäße Korrosionsschutz-Zusammensetzung aufgetragen wird.

Die erfindungsgemäße Korrosionsschutz-Zusammensetzung wird vorzugsweise mit einer solchen Naßfilmdicke auf die Metalloberfläche aufgetragen, daß man nach dem Aushärten eine Schichtdicke im Bereich von etwa 0,5 bis etwa 10 µm erhält. Vorzugsweise werden Schichtdicken im Bereich um 4 µm, beispielsweise 1 bis 6 µm eingestellt.

Die Applikation der Korrosionsschutz-Zusammensetzung geschieht im allgemeinen bei Temperaturen zwischen 0 und 90°C, bevorzugt 15 und 70°C und insbesondere 40 bis 60°C. Danach wird der Überzug durch energiereiche Strahlung wie weiter vorne beschrieben vernetzt. Bei der Auftragstemperatur muß die Korrosionsschutz-Zusammensetzung eine geeignete Viskosität aufweisen, wie sie vorstehend definiert wurde. Beträgt die Auftragstemperatur beispielsweise 60°C, hat das erfindungsgemäße Korrosionsschutzmittel bei dieser Temperatur eine mit einem DIN-Becher (4 mm-Düse) gemessene Viskosität im Bereich von 10 bis 120 Sekunden, vorzugsweise im Bereich von 30 bis 90 Sekunden.

In einer besonderen Verfahrensausführung kann der Anteil an Sauerstoff in der Zone oberhalb des zu vernetzenden Substrats reduziert werden. Hierbei soll er insbesondere unterhalb von 3000 ppm liegen, bevorzugt unter 1000 ppm. Das kann beispielsweise durch teilweisen oder vollständigen Austausch der in der Vernetzungszone vorhandenen Umgebungsluft durch inerte Gase geschehen, z.B. durch Argon, Stickstoff, CO₂ oder Gemische davon. Ein Vorteil dieser Verfahrensausführung liegt darin, dass die benötigte Konzentration an Photoinitiator in der Korrosionsschutz-Zusammensetzung verringert werden kann.

Demnach betrifft die Erfindung in einem weiteren Aspekt ein Verfahren zur Beschichtung von Metalloberflächen mit einer leitfähigen organischen Korrosionsschutzschicht, dadurch gekennzeichnet, dass man
a) erforderlichenfalls die Metalloberflächen reinigt,
b) die Metalloberflächen mit einer Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist,
c) hiernach die Metalloberflächen mit einer Zusammensetzung nach einem oder mehreren der Ansprüche 1 bis 12 mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach
d) die aufgebrachte Beschichtung durch Bestrahlen mit energiereicher Strahlung für eine Zeitdauer im Bereich von 0,001 bis 300 Sekunden, vorzugsweise im Bereich von 0,1 bis 30 Sekunden aushärtet.

Die vorliegende Erfindung betrifft also auch ein Verfahren zur Beschichtung eines Metallgegenstandes mit einer elektrisch leitfähigen organischen Korrosionsschutzschicht, wobei man (erforderlichenfalls nach einer Reinigung) zunächst die Metalloberflächen mit einer Flüssigkeit in Kontakt bringt, die mindestens eine organische Verbindung mit einer Molmasse von nicht mehr als 700 g/mol enthält, die mindestens eine durch radikalische Polymerisation (insbesondere durch UV-Strahlung ausgelöst) vernetzbare Gruppe und mindestens eine H-aktive Gruppe aufweist. Diese Flüssigkeit kann dabei weitere Wirkstoffe enthalten, die mit der Metalloberfläche im Sinne einer Konversionsbehandlung reagieren. Dieser Schritt verbessert die Haftung der elektrisch leitfähigen organischen Korrosionsschutzschicht auf der Metalloberfläche. Hierauf beschichtet man die Metalloberflächen mit der vorstehend beschriebenen Korrosionsschutz-Zusammensetzung, die Leitfähigkeitspigmente sowie ein organisches Bindemittelsystem enthält, das durch Einwirkung energiereicher Strahlung wie beispielsweise UV-Strahlung aushärtbar ist. Ein Vorteil dieses Verfahrens liegt darin, dass mit relativ kurzen UV-Lampenstationen, die auf die Konversationsvorbehandlung applizierte, lösungsmittelfreie Leitfähigkeitsschicht innerhalb von Bruchteilen einer Sekunde bei den geforderten hohen Bandgeschwindigkeiten eines Coil-Coating-Prozesses ausgehärtet werden kann, wobei das Substrat nur unwesentlich erwärmt wird. Das so beschichtete metallische Substrat kann vorzugsweise im Fahrzeugbau eingesetzt werden. Die leitfähige Beschichtung erlaubt nachfolgende automobiltypische Verfahrensschritte, wie Umformen, Biegen, Tiefziehprozesse, Schweißen, Kleben, Reinigen, kathodische Tauchlack-Beschichtung der Rohkarosse und ähnliche Arbeitsschritte. Die geringe thermische Belastung des Substrats ermöglicht die Anwendung der erfindungsgemäßen Beschichtung auf "Bake-hardening"-Stähle. Außerdem eignet sich die nach dem erfindungsgemäßen Verfahren durchgeführte Beschichtung für ein "Inline"-Verfahren, das heißt die Beschichtung mit der haftvermittelnden Vorbehandlung und der elektrisch leitfähigen Beschichtung kann direkt nach der Verzinkung des Bandstahls durchgeführt werden. Dadurch kommt es zur Verkürzung von Prozeßschritten. Es ist somit möglich, auf separate Verzinkungs- und Coil-Coating-Linien zu verzichten und diese Schritte in einer gemeinsamen Fertigungslinie zu kombinieren.

Die zu beschichtenden Metalloberflächen sind vorzugsweise ausgewählt aus Oberflächen von elektrolytisch oder im Schmelztauchverfahren verzinktem oder legierungsverzinktem Stahl oder aus Aluminium. Beispiele für legierungsverzinkte Stähle sind die Materialien Galvannealed^{R} (Zn/Fe-Legierung), Galfan^{R} (Zn/Al-Legierung) und Zn/Ni-legierungsbeschichteter Stahl.

Schließlich betrifft die Erfindung jeden Metallgegenstand mit einer Korrosionsschutzschicht, der nach dem erfindungsgemäßen Verfahren erhältlich ist. Dabei kann die erfindungsgemäß hergestellte Korrosionsschutzschicht auch mit weiteren Lackschichten überzogen sein.

Bei der Verwendung der erfindungsgemäß beschichteten Metallteile beispielsweise im Fahrzeugbau und in der Haushaltsgeräteindustrie können chemische Behandlungsstufen für die Korrosionsschutzbehandlung der gefertigten Bauteile entfallen. Die zusammengefügten Bauteile, die die erfindungsgemäße Beschichtung tragen, können unmittelbar überlackiert werden, beispielsweise durch Pulverlackierung oder durch elektrolytische Tauchlackierung. An Stellen, an den keine Überlackierung erfolgt, beispielsweise in Hohlräumen in Fahrzeugkarosserien, weisen die erfindungsgemäß beschichteten Metallteile eine ausreichend hohe Korrosionsbeständigkeit auf. Aufwendige Arbeitsschritte wie beispielsweise eine Hohlraumkonservierung können hierdurch entfallen. Dies vereinfacht zum einen die Fertigungsprozesse im Fahrzeugbau und reduziert somit die Produktionskosten, Darüber hinaus führt es gegenüber einer konventionellen Hohlraumversiegelung zu einer Gewichtsersparnis und damit zu einem geringeren Treibstoffverbrauch.

Ein Vorteil des erfindungsgemäß beschichteten Materials besteht bei Verwendung von Zink als Leitfähigkeitspigment darin, dass es ein sehr gutes Pressverhalten zeigt, so dass beim Pressen weniger Abrieb entsteht. Hierdurch kann der Beölungsgrad beim Pressen herabgesetzt werden.

Die nach dem erfindungsgemäßen Verfahren hergestellte leitfähige organische Schicht bietet also die Basis für eine Weitere Überlackierung, wie sie im allgemeinen im Metallbau üblich ist. Beispielsweise kann auf die leitfähige organische Schicht eine Pulverlackschicht aufgebracht werden. Damit betrifft die Erfindung in einem erweiterten Aspekt einen Metallgegenstand, der auf der Metalloberfläche ein Beschichtungssystem aus folgenden Einzelschichten aufweist:
a) leitfähige organische Korrosionsschutzschicht, die nach dem vorstehend beschriebenen Verfahren erhältlich ist,
b) Pulverlackschicht mit einer Dicke von 70 bis 120 µm.

Eine Pulverlackierung ist insbesondere beim Maschinenbau, bei Metallteilen für den Innenausbau von Gebäuden, in der Möbel- und Haushaltsgeräteindustrie üblich. Im Fahrzeugbau bevorzugt man derzeit wegen der höheren mechanischen und korrosiven Beanspruchung ein Mehrschichtsystem, bei dem auf eine Grundbeschichtung eine unterschiedliche Abfolge organischer Beschichtungen folgt, beispielsweise eine kathodische Elektrotauchlackierung, eine Füllerschicht und ein ein- oder zweischichtiger Decklack. Hierbei kann die nach dem erfindungsgemäßen Verfahren erhältliche leitfähige Korrosionsschutz-Beschichtung als Grundbeschichtung dienen. Daher umfasst die Erfindung in einem weiteren Aspekt einen Metallgegenstand, der auf der Metalloberfläche ein Beschichtungssystem aus mindestens folgenden Einzelschichten aufweist:
a) leitfähige organische Korrosionsschutzschicht, die nach dem vorstehend beschriebenen Verfahren erhältlich ist,
b) Elektrotauchlack,
c) ein- oder zweischichtiger Decklack.
Dabei kann wie üblich zwischen Elektrotauchlack und Decklack eine Füllerschicht liegen. In diesem Fall kann der Elektrotauchlack wie üblich eine Schichtdicke im Bereich von etwa 15 bis 20 µm aufweisen.

Auf der erfindungsgemäß erhältlichen leitfähigen Korrosionsschutzbeschichtung kann jedoch auch ein kathodisch abscheidbarer Elektrotauchlack mit einer größeren Schichtdicke, beispielsweise im Bereich von 25 bis 35 µm, abgeschieden werden. In diesem Fall kann man auf die bisher übliche Füllerschicht verzichten und den ein- oder zweischichtigen Decklack unmittelbar auf den kathodischen Elektrotauchlack aufbringen. Gemäß dieser Ausführungsform der vorliegenden Erfindung kann der Füller eingespart werden, da dessen Funktion (insbesondere die Erhöhung der Steinschlagfestigkeit) von dem Elektrotauchlack übernommen wird. Daher kann ein Lackierschritt eingespart werden. Darüber hinaus ist das gesamte Beschichtungssystem gemäß der vorliegenden Erfindung dünner als im Stand der Technik üblich. Hierdurch wird Material eingespart, was zu ökonomischen und ökologischen Vorteilen führt.

Der Decklack kann ein- oder zweischichtig ausgeführt sein. Bei zweischichtiger Ausführung besteht er aus einem sogenannten Basecoat, der vor allem für den optischen Eindruck des Beschichtungssystems sorgt, und einem Clearcoat, der im wesentlichen Schutzfunktion hat und durch den der Basecoat sichtbar ist.

Da das Grundmaterial bereits mit der leitfähigen organischen Schicht angeliefert wird, vereinfachen sich beim Hersteller der Metallgegenstände wie beispielsweise Fahrzeugen oder Haushaltsgeräten die bisher erforderlichen Schritte zum Erzeugen der chemischen Konversionsschicht und dem Aufbringen der verschiedenen organischen Überzüge.

Die Erfindung umfasst ebenfalls die Verfahren zur Beschichtung eines Metallgegenstands, die zu den vorstehend beschriebenen Metallgegenständen führen. Sie umfasst weiterhin die gesamte Verfahrensabfolge, bei der man zunächst die leitfähige organische Korrosionsschutzbeschichtung herstellt (vorzugsweise im Coil-Coating-Verfahren), aus den so erhaltenen Blechen Metallgegenstände wie beispielsweise Automobilkarosserien oder Haushaltsgeräte herstellt und diese anschließend überlackiert, beispielsweise durch kathodische Elektrotauchlackierung oder durch Pulverlackierung.

Zum einen betrifft dies ein Verfahren zur Herstellung eines Metallgegenstands, dadurch gekennzeichnet, dass man
I) Bleche mit einer beschichteten Metalloberfläche erzeugt, indem man
   a) erforderlichenfalls die Metalloberfläche reinigt,
   b) die Metalloberfläche mit einer Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist,
   c) hiernach die Metalloberfläche mit einer Zusammensetzung nach einem oder mehreren der Ansprüche 1 bis 11 mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach
   d) die aufgebrachte Beschichtung durch Bestrahlen mit energiereicher Strahlung für eine Zeitdauer im Bereich von 0,001 bis 300 Sekunden; vorzugsweise im Bereich von 0,1 bis 30 Sekunden aushärtet,
II) Die Bleche zu Metallgegenständen mit Metalloberflächen umformt und/oder zusammenfügt,
III) erforderlichenfalls die Metalloberflächen der Metallgegenstände reinigt und
IV) die Metalloberflächen der Metallgegenstände mit einem Pulverlack mit einer Dicke von 70 bis 120 µm beschichtet.

Weiterhin betrifft dies ein Verfahren zur Herstellung eines, dadurch gekennzeichnet, dass man
I) Bleche mit einer beschichteten Metalloberfläche erzeugt, indem man
   a) erforderlichenfalls die Metalloberfläche reinigt,
   b) die Metalloberfläche mit einer Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist,
   c) hiernach die Metalloberfläche mit einer Zusammensetzung nach einem oder mehreren der Ansprüche 1 bis 11 mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach
   d) die aufgebrachte Beschichtung durch Bestrahlen mit energiereicher Strahlung für eine Zeitdauer im Bereich von 0,001 bis 300 Sekunden, vorzugsweise im Bereich von 0,1 bis 30 Sekunden aushärtet,
II) Die Bleche zu Metallgegenständen mit Metalloberflächen umformt und/oder zusammenfügt, erforderlichenfalls die Metalloberflächen der Metallgegenstände reinigt und
III) die Metalloberflächen der Metallgegenstände mit einem kathodisch abscheidbaren Elektrotauchlack und danach
IV) mit einem ein- oder zweischichtigen Decklack beschichtet,
wobei zwischen den Schritten IV) und V) eine Füllerschicht aufgebracht werden kann.

In einer speziellen Ausführungsform hiervon scheidet man den Eletrotauchlack mit einer höheren Schichtdicke als bisher üblich ab und verzichtet auf die Füllerschicht zwischen Elektrotauchlack und Decklack. Diese spezielle Ausführungsform betrifft demnach ein Verfahren zur Herstellung eines Metallgegenstands, dadurch gekennzeichnet, dass man
I) Bleche mit einer beschichteten Metalloberfläche erzeugt, indem man
   a) erforderlichenfalls die Metalloberfläche reinigt,
   b) die Metalloberfläche mit einer Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist,
   c) hiernach die Metalloberfläche mit einer Zusammensetzung nach einem oder mehreren der Ansprüche 1 bis 11 mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach
   d) die aufgebrachte Beschichtung durch Bestrahlen mit energiereicher Strahlung für eine Zeitdauer im Bereich von 0,001 bis 300 Sekunden, vorzugsweise im Bereich von 0,1 bis 30 Sekunden aushärtet,
II) Die Bleche zu Metallgegenständen mit Metalloberflächen umformt und/oder zusammenfügt,
III) erforderlichenfalls die Metalloberflächen der Metallgegenstände reinigt und
IV) die Metalloberflächen der Metallgegenstände mit einem kathodisch abscheidbaren Elektrotauchlack mit einer Dicke im Bereich von 25 bis 35 µm und danach ohne Aufbringen einer Füllerschicht
IV) mit einem ein- oder zweischichtigen Decklack beschichtet.

Das genannte Zusammenfügen der Bleche zu den Metallgegenständen erfolgt dabei vorzugsweise zumindest teilweise durch Elektroschweißen, das durch die elektrische Leitfähigkeit der organischen Korrosionsschutzbeschichtung ermöglicht wird.

Nachfolgend wird die Erfindung durch einige Ausführungsbeispiele näher erläutert.

### Beispiele

### a) Herstellung und Applikation einer Vorbehandlungslösung vor der Beschichtung mit der erfindungsgemäßen Korrosionsschutz-Zusammensetzung

Ein Konversionsbehandlungs-Konzentrat folgender Zusammensetzung

| | Anteil (Gew.-%) |
|---|---|
| Vollentsalztes Wasser | 64,6 |
| H₃PO₄(75 %) | 4,6 |
| H₂ TiF₆ (60 %) | 8,0 |
| Aminomethyl-substituiertes Polyvinylphenol | 20,4 |
| Mangan(II)oxid | 2,4 |

wird mit 18 g einer Mischung aus Mono-, Di- und Triestern der Phosphorsäure von 2-Hydroxyethyl(meth)acrylat versetzt und 2 Minuten gerührt. Anschließend werden 100 g vollentsalztes Wasser hinzugegeben. Die Vorbehandlungslösung ist dann anwendungsfertig.

Auf ein mit alkalischen Reinigern (z.B. Ridoline^{®} C 72, Ridoline^{®} 1340;Tauch-, Spritzreinigungsprodukte der Anmelderin) gereinigtes, verzinktes Metallblech wird die Vorbehandlungslösung aufgetragen und mit einem Gummiwischer auf der Metalloberfläche verteilt. Es erfolgt eine Trocknung für 5 min bei 70 °C.

### b) Herstellvorschrift und Applikation der Korrosionsschutz-Zusammensetzung:

Die organischen Bindemittel werden bei Raumtemperatur in einem Dissolvergefäß vorgelegt und das Leitfähigkeitspigment(gemisch) unter Mischen mit einem Dissolver bei 1600 Umdrehungen pro Minute portionsweise zugegeben. Nach dem Homogenisieren wird das Korrosionsschutzpigment(gemisch) hinzugegeben und 5 Minuten gemischt. Anschließend setzt man den Photoinitiator bzw. ein Photoinitiatorgemisch sowie die Additive hinzu. Es wird so lange homogenisiert, bis eine einheitliche Formulierung vorliegt.

Die Korrosionsschutz-Zusammensetzung wird mit einem Rakel oder einem Roll-Coater auf die vorbehandelten Bleche appliziert und durch Bestrahlung mit UV-Lampen (Typ Fusion VPS/I600, H- + D-Strahler, je 240 W/cm, jeweils 100 % Leistung, Lampenfokusbreite 1 - 2 cm) bei einer Bandgeschwindigkeit von 20 m/Minute gehärtet.

### c) Testverfahren :

### Korrosionsschutztest [nach DIN 50021]:

Die Kanten des beschichteten Prüfblechs werden mit Klebeband abgeklebt. An einer Längsseite erzeugt man eine frische Schnittkante. Ferner wird das Blech mit einem Ritz versehen. Anschließend werden das Prüfblech in das Salzsprühnebeltestgerät verbracht. Beurteilt wird nach bestimmten Zeitintervallen der Weißrostgrad am Ritz, Kante und auf der Blechoberfläche. In den Tabellen ist die Stundenzahl angegeben, nach der Rotrost auf den Prüfblechen zusehen ist.

### MEK-Beständigkeit:

Ein 1 kg Gewichtsblock wird mit Methylethylketon (MEK) getränkter Watte umwickelt und über die zu testende, mit der Korrosionsschutz-Zusammensetzung beschichtete Oberfläche geführt. Die Anzahl an Doppelhüben, die benötigt werden um die Beschichtung bis zum Sichtbarwerden des metallischen Untergrundes zu entfernen, werden gezählt und sind ein Maß für die Lösemittelbeständigkeit.

### T-Bend-Test: gem. ECCA-Prüfverfahren T7 [1996]: "Resistance to cracking on bending"

Das beschichtete Blech wird mit einer Abkantpresse um 180° gebogen. Ein Klebeband (Tesafilm 4104) wird auf die Kante geklebt und ruckartig abgerissen. Die Rissbildung an der umgeformten Kante wird nach DIN 53230 beurteilt.

### Reverse Impact-Test: gem. ECCA-Prüfverfahren T5 [1985]: "Widerstand gegen Rissbildung bei schneller Umformung"

Mit einem Kugelschlagprüfgerät (Gewicht: 2 kg; Höhe: 1 m) wird das einseitig beschichteten Bleche umgeformt. Ein Klebeband (Tesafilm 4104) wird auf die entstandene Wölbung geklebt und ruckartig abgerissen. Optisch wird die Menge an mit dem Klebeband abgelöster Beschichtung beurteilt.

### Napfzug:

Es werden Ronden mit einem Durchmesser von 65 mm aus einseitig beschichtetem Blechmaterial ausgestanzt, entgratet, gereinigt und gewogen. Anschließend wird Ziehöl aufgetragen und Näpfchen (ErichsenTyp 224/2) mit einer Ziehtiefe von 19 mm gezogen. Die Ronden werden anschließend mit Benzin gereinigt und abermals gewogen. Beurteilt wird der Abrieb beim Tiefzug, der sich aus der Gewichtsdifferenz beider Wägungen ergibt.

### Alkalibeständigkeit:

Die Näpfchen (siehe Napfzug) werden 5 min bei 50 °C in Ridoline^{®} 1559 getaucht, mit Wasser abgespült und mit Pressluft abgeblasen. Beurteilt wird durch Wägung (in g/m²) das Ablösen der Beschichtung.

### Schweißtests:

Mit einem Schweißautomaten der Firma Dalex (Typ PMS 11-4) wurden Elektro-Schweißtests unter automobiltypischen Bedingungen durchgeführt. Es wurden Schweißpunkte innerhalb der DaimlerChrysler-Spezifikation DBL 4062/4066 ermittelt. Dies bedeutet, dass die mit dem erfindungsgemäßen Korrosionsschutzmittel beschichteten Bleche unter Praxisbedingungen mit einer ausreichenden Elektrodenstandzeit elektroschweißbar sind.

Einzelheiten zur Zusammensetzung erfindungsgemäßer Korrosionsschutz-Zusammensetzungen und Prüfergebnisse können den nachstehenden Tabellen entnommen werden. Dabei gelten folgende Abkürzungen oder Bezeichnungen:
M = Molmasse
mPas = Millipascalsekunden zur Viskositätsangabe der Harzkomponenten DPGDA = Dipropylenglykoldiacrylat
TMPFA = Trimethylolpropanformalacrylat als Reaktivverdünner. Weitere Reaktivverdünner einzelner Beispiele: Beisp. 17: Propoxydiacrylat; Beispiel 24: Epoxyacrylat; Beispiel 25: Phenoxyacrylat und Hydroxyalkylmethacrylat; Beispiel 26: Epoxyacrylat und Hydroxyalkylmethacrylat. Das chlorierte Polyesteracrylat in Beispiel 23 enthält 40 Gew.-% Trimethylolpropantriacrylat als Reaktivverdünner.
elektr. leitfähiges Pigment 1 = Zinkpulver
elektr. leitfähiges Pigment 2 = Graphitpulver

Alle Zusammensetzungen hatten bei 60 °C eine Viskosität, bestimmt mit dem DIN-Becher wie im Text- beschrieben, von 30 bis 120 Sekunden.

### Beispiele

**TAB.1**

| | Beispiel 1 | Beispiel 2 | Beispiel 3 | Beispiel 4 | Beispiel 5 | Beispiel 6 | Beispiel 7 |
|---|---|---|---|---|---|---|---|
| Aliph. Urethanacrylat M = 700 g/mol | | | | 1,2% | | | |
| Arom. Urethanacrylat M = 5800 g/mol | | | | | | | |
| DPGDA M = 240 g/mol | | | 18,8% | | | | |
| Epoxydiacrylat M = 530 g/mol | | | | | | 7,2% | |
| Hexandioldiacrylat | | | | | | 1,8% | |
| Hydroxyalkylmethacrylat M = 144 g/mol | 3,5% | 2,7% | | 3,2% | | | |
| Oligo Urethanacrylat 1100 mPas | | | | | | | 9,0% |
| Aliph. Urethanacrylat M = 1300 g/mol | | | | | | | |
| Polyethylenglycoldiacrylat M = 300 g/mol | | | | | | | |
| Aliph. Urethanacrylat M = 5000 g/mol | | | 34,9% | | | | |
| Polyurethanacrylat 3500 mPas | 8,1% | 6,2% | | 7,6% | | | |
| Phosphorsäureester ~ 1000 mPas | | | 4,4% | | | | |
| TMPFA | 12,6% | 9,6% | 35,0% | 11,5% | 19,2% | 17,8% | 17,8% |
| elektr. leitfähiges Pigment 1 | 72,2% | 75,0% | | 70,0% | 77,4% | 71,7% | 71,7% |
| elektr. leitfähiges Pigment 2 | | | 2,0% | | | | |
| Ca-Ionen modif. Kieselsäure | 2,1% | 5,0% | | 5,0% | 1,9% | | |
| 1-Hydroxy-cyclohexylphenylketon | | | | | | | |
| 50% 1-Hydroxy-cyclohexylphenylketon+ 50 % Benzophenon | 0,5% | 0,5% | 1,0% | 0,5% | 0,5% | 0,5% | 0,5% |
| BAPO (Phosphinoxid, phenyl bis(2,4,6-trimethylbenzoyl) | 1,0% | 1,0% | 3,9% | 1,0% | 1,0% | 1,0% | 1,0% |
| Gitterschnitt (DIN 53151) | 0 | 0 | 0 | 0 | 0 | 0 | 0 |
| T₀(ECCA T 20) | 2 | 4 | 3 | 4 | 2 | 5 | 5 |
| Reverse Impact (2 kg / 1 m) (ECCA T 5) | 0 | 0 | 1 | 0 | 1 | 5 | 3 |
| MEK-Doppelhübe | 5 | 7 | > 100 | 15 | 6 | > 100 | > 100 |
| Salzsprühnebeltest (DIN 50021) | 500 h | - | 1300 h | 1000 h | 400 h | 1500 h | > 1300 h |

**TAB. 2**

| | Beispiel 8 | Beispiel 9 | Beispiel 10 | Beispiel 11 | Beispiel 12 |
|---|---|---|---|---|---|
| Aliph. Urethanacrylat M = 700 g/mol | | | | | |
| Arom. Urethanacrylat M = 5800 g/mol | 9,0% | | | | |
| DPGDA M = 240 g/mol | | | 2,8% | | |
| Epoxydiacrylat M = 530 g/mol | | | | | |
| Hexandioldiacrylat | | 2,8% | | | |
| Hydroxyalkylmethacrylat M = 144 g/mol | | | | | |
| Oligo Urethanacrylat 1100 mPas | | | | | |
| Aliph. Urethanacrylat M = 1300 g/mol | | | | | 2,8% |
| Polyethylenglycoldiacrylat M = 300 g/mol | | | | 2,8% | |
| Aliph. Urethanacrylat M = 5000 g/mol | | | | | |
| Polyurethanacrylat 3500 mPas | | | | | |
| Phosphorsäureester ~1000 mPas | | | | | |
| TMPFA | 17,8% | 18,8% | 18,8% | 18,8% | 18,8% |
| elektr. leitfähiges Pigment 1 | 71,7% | 75,0% | 75,0% | 75.0% | 75,0% |
| elektr. leitfähiges Pigment 2 | | | | | |
| Ca-lonen modif. Kieselsäure | | 1,9% | 1,9% | 1,9% | 1,9% |
| 1-Hydroxy-cyclohexylphenylketon | | | | | |
| 50 % 1-Hydroxy-cyclohexylphenylkelon + 50 % Benzophenon | 0,5% | 0,5% | 0,5% | 0,5% | 0,5% |
| BAPO (Phosphinoxid, phenyl bis(2,4,6-trimethylbenzoyl) | 1,0% | 1,0% | 1,0% | 1,0% | 1,0% |
| Gitterschnitt (DIN 53151) | 0 | 0 | 0 | 0 | 0 |
| T₀ (ECCA T 20) | 5 | 4 | 4 | 5 | 5 |
| Reverse Impact (2 kg / 1 m) (ECCA T 5) | 2 | 4 | 4 | 2 | 2 |
| MEK-Doppelhübe | 15 | > 100 | 70 | 80 | > 100 |
| Salzsprühnebeltest (DIN 50021) | 1000 h | 1200 h | 1200 h | 1000 h | 1000 h |

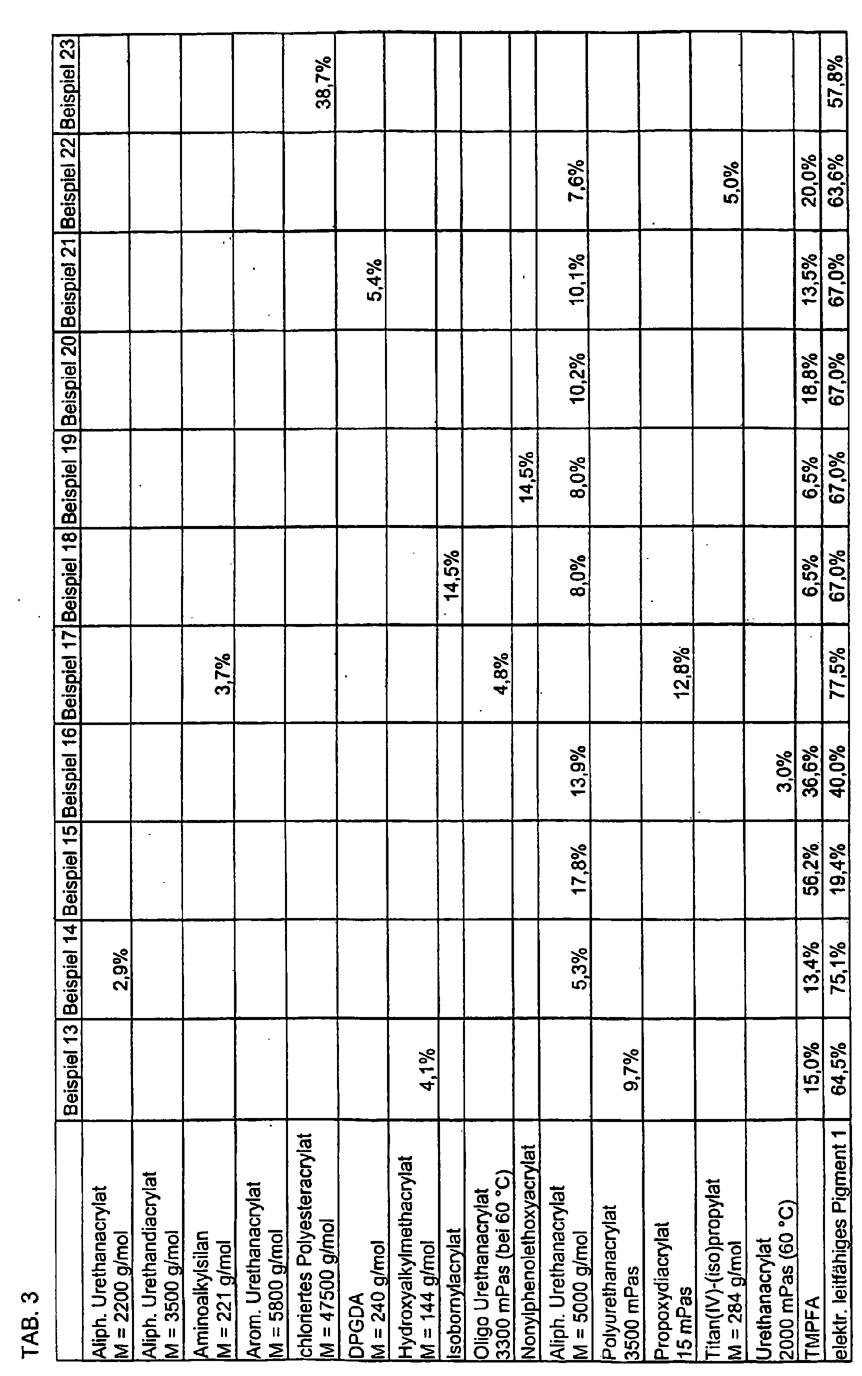

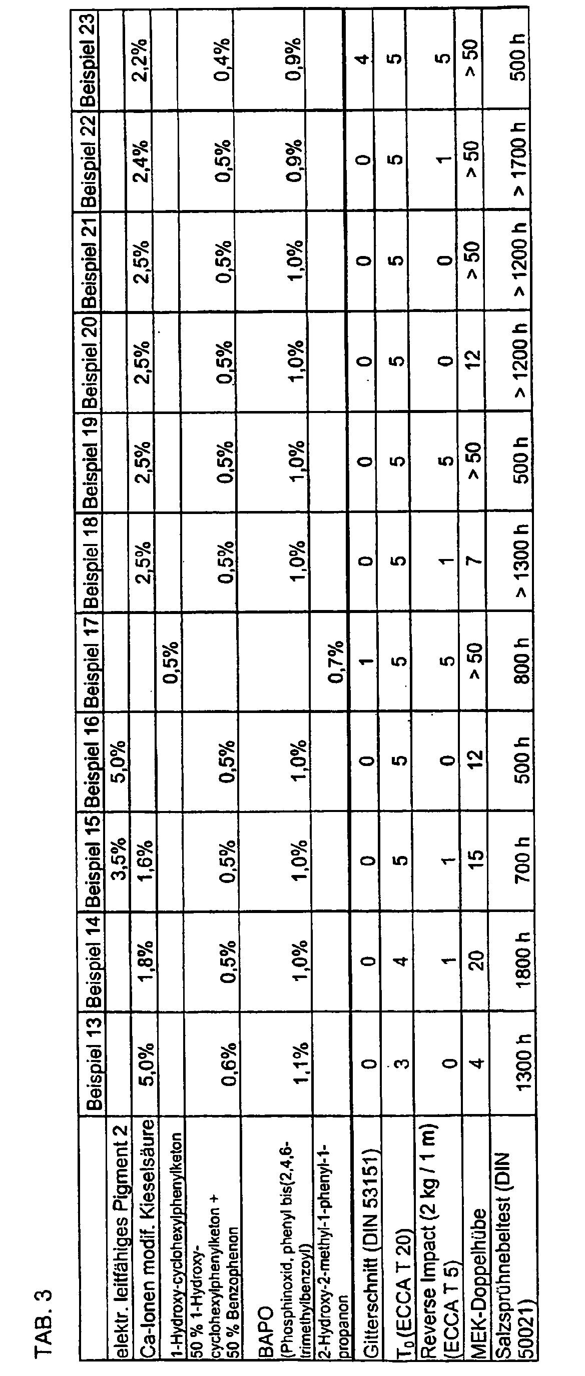

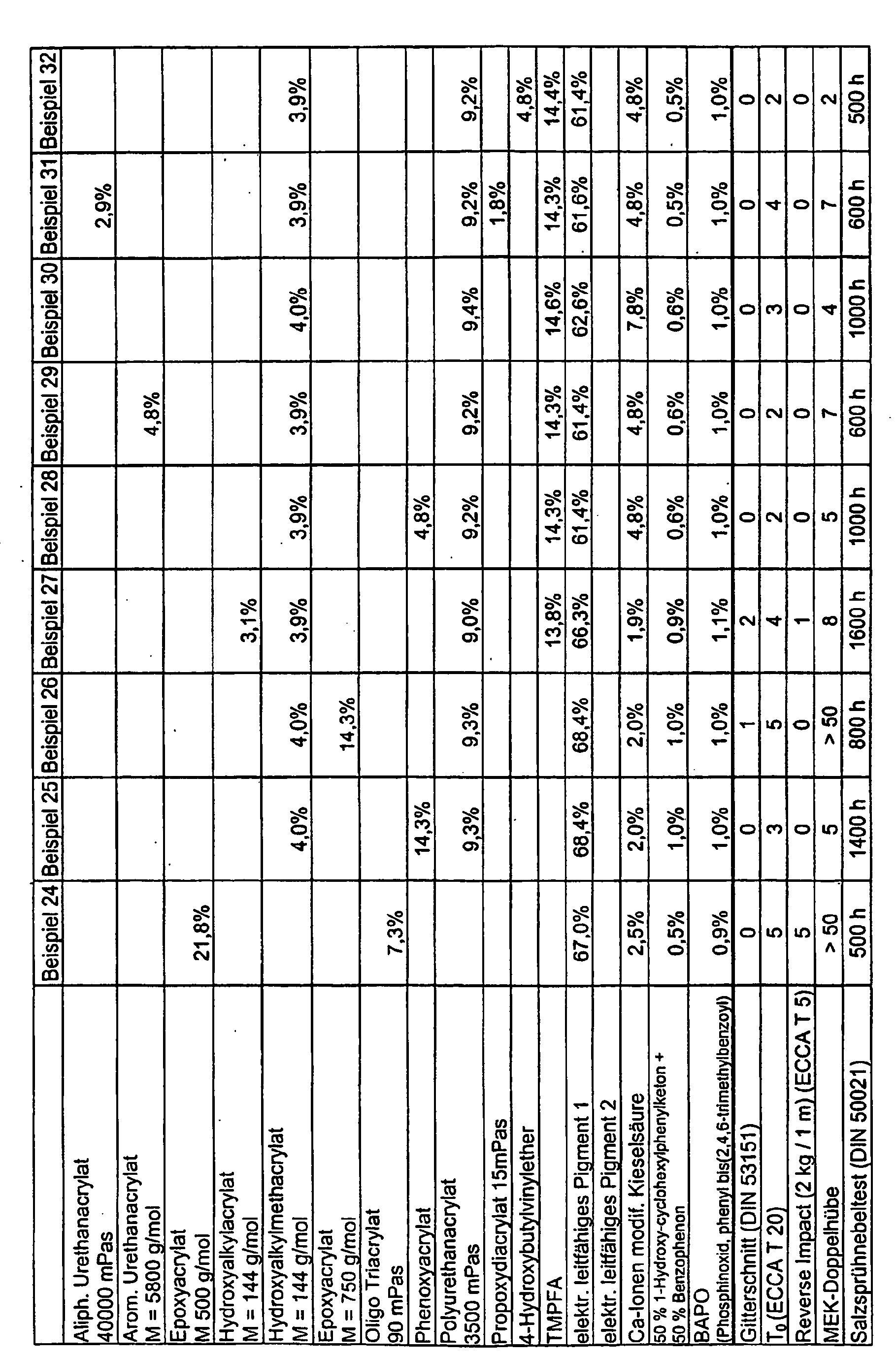

## Patentansprüche

1. Elektrisch leitfähige und schweißbare, im wesentlichen lösungsmittelfreie Korrosionsschutz-Zusammensetzung zur Beschichtung von Metalloberflächen, **dadurch gekennzeichnet, dass** sie, bezogen auf die Gesamtzusammensetzung,
a) 5 bis 80 Gew.-% eines organischen Bindemittels,
b) 0 bis 15 Gew.-% eines Korrosionsschutzpigments,
c1) bis zu 90 Gew.-% eines Leitfähigkeitspigments mit einer Dichte von mindestens 3 g/cm³. vorzugsweise ausgewählt aus jeweils pulverförmigem Zink, Eisen, Edelstahl, Molybdändisulfid, und Phosphiden und Oxiden des Eisens, die einzeln oder im Gemisch vorliegen können, wobei die Summe Σ(x_{L(i)}) der Gewichtsanteile aller Leitfähigkeitspigmente (x_{L(i)}) an der Gesamtzusammensetzung, ausgedrückt als Dezimalbruch, im Bereich von Σ[(0,09 bis 0,13)•Dᵢ•aᵢ] liegt, wobei Dᵢ die Dichte des i-ten Leitfähigkeitspigments in g/cm³ und aᵢ den Bruchteil der Gewichtsmenge des i-ten Leitfähigkeitspigments an der Gesamt-Gewichtsmenge aller Leitfähigkeitspigmente bedeuten, mit der Bedingung, dass die Summe Σ(x_{L(i)}) der Gewichtsanteile aller Leitfähigkeitspigmente (x_{L(i)}) an der Gesamtzusammensetzung, ausgedrückt als Dezimalbruch, nicht größer als 0,9 ist,
sowie erwünschtenfalls bis zu 50 Gew.-% weitere Wirk- oder Hilfsstoffe enthält, wobei sich die Anteile der Komponenten zu 100 % addieren,
wobei die Zusammensetzung eine Viskosität, gemessen bei der Applikationstemperatur mit einem DIN-Becher mit einer 4 mm-Auslaufdüse, im Bereich von 10 bis 120 Sekunden, vorzugsweise im Bereich von 30 bis 90 Sekunden aufweist.

2. Zusammensetzung nach Anspruch 1, **dadurch gekennzeichnet, dass** sie zusätzlich
c2) 2 bis 20 Gew.-% eines Leitfähigkeitspigments mit einer Dichte unterhalb von 3 g/cm³, vorzugsweise ausgewählt aus Aluminium, Ruß und Graphit, enthält.

3. Zusammensetzung nach einem oder beiden der Ansprüche 1 und 2, **dadurch gekennzeichnet, dass** das organische Bindemittel so gewählt ist, dass es durch Einwirkung von energiereicher Strahlung aushärtbar ist.

4. Zusammensetzung nach Anspruch 3, **dadurch gekennzeichnet, dass** das organische Bindemittel
aa) mindestens ein radikalisch polymerisierbares Harz,
ab) mindestens einen Reaktivverdünner,
ac) mindestens einen Photoinitiator
enthält.

5. Zusammensetzung nach Anspruch 4, **dadurch gekennzeichnet, dass** das radikalisch polymerisierbare Harz aa) ausgewählt ist aus Polyester-, Urethan- oder epoxy-modifizierten (Meth)acrylatharzen oder einer Mischung hiervon.

6. Zusammensetzung nach einem oder beiden der Ansprüche 4 und 5,
**dadurch gekennzeichnet, dass** das organische Bindemittel, bezogen auf die Gesamtmenge des organischen Bindemittels,
2 bis 80 Gew.-% der Komponente aa),
4 bis 95 Gew.-% der Komponente ab) und
0,1 bis 10 Gew.-% der Komponente ac)
enthält, wobei sich die Mengenanteile zu 100 % addieren.

7. Zusammensetzung nach einem oder mehreren der Ansprüche 1 bis 6, **dadurch gekennzeichnet, dass** der Gewichtsanteil x_{B} des organischen Bindemittels an der Gesamtzusammensetzung, ausgedrückt als Dezimalbruch, so gewählt wird, dass er im Bereich von [(0,5 bis 1) minus (Summe Σ(x_{L(i)}) der Gewichtsanteile aller Leitfähigkeitspigmente)] liegt.

8. Zusammensetzung nach einem oder mehreren der Ansprüche 4 bis 7, **dadurch gekennzeichnet, dass** das radikalisch polymerisierbare Harz ein Molgewicht von mindestens 500 aufweist.

9. Zusammensetzung nach einem oder mehreren der Ansprüche 1 bis 8, **dadurch gekennzeichnet, dass** sie als Komponente b) mindestens ein Korrosionsschutzpigment und/oder mindestens einen Korrosionsinhibitor ausgewählt aus dotierter Kieselsäure, Silicaten zweiwertiger Metalle, Aluminium- und Zinkphosphaten und Modifikationsprodukten hiervon, oberflächenmodifiziertem Titandioxid, Alkoxytitanaten, Silanen, Benzthiazolderivaten, Zink- oder Calciumgluconaten, Salizylsäurederivaten und Phosphorsäureester alkoxylierter Zellulose ("Zellulosephosphat") enthält.

10. Zusammensetzung nach einem oder mehreren der Ansprüche 1 bis 9,
**dadurch gekennzeichnet, dass** als Komponente c) jeweils pulverförmiges Zink, Eisenphosphid, Eisenoxid oder eine Mischung zweier oder mehrerer dieser Stoffe vorliegt.

11. Zusammensetzung nach einem oder mehreren der Ansprüche 1 bis 10,
**dadurch gekennzeichnet, dass** sie frei ist von reaktionsfähige oder verkappte Isocyanatgruppen enthaltenden Bindemittelbestandteilen.

12. Verwendung der Zusammensetzung gemäß einem der vorhergehenden Ansprüche zum Beschichten von Metallbändern im Coil-Coating Verfahren.

13. Verfahren zur Beschichtung von Metalloberflächen mit einer leitfähigen organischen Korrosionsschutzschicht, **dadurch gekennzeichnet, dass** man
a) erforderlichenfalls die Metalloberflächen reinigt,
b) die Metalloberflächen mit einer Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist,
c) hiernach die Metalloberflächen mit einer elektrisch leitfähigen und schweißbaren, im wesentlichen lösungsmittelfreien Korrosionsschutz-Zusammensetzung, die, bezogen auf die Gesamtzusammensetzung,
a) 5 bis 98 Gew.-% eines organischen Bindemittels,
b) 0 bis 15 Gew.-% eines Korrosionsschutzpigments,
c1) 20 bis 90 Gew.-% eines Leitfähigkeitspigments mit einer Dichte von mindestens 3 g/cm³, vorzugsweise ausgewählt aus jeweils pulverförmigem Zink, Eisen, Edelstahl, Molybdändisulfid, und Phosphiden und Oxiden des Elsens, die einzeln oder im Gemisch vorliegen können, wobei in diesem Fall der Mengenanteil an organischem Bindemittel a) maximal 80 Gew.-% beträgt, und/oder c2) 2 bis 20 Gew,-% eines Leitfähigkeitspigments mit einer Dichte unterhalb von 3 g/cm³, vorzugsweise ausgewählt aus Aluminium, Ruß und Graphit sowie erwünschtenfalls bis zu 50 Gew.-% weitere Wirk- oder Hilfsstoffe enthält,
wobei sich die Anteile der Komponenten zu 100 % addieren und wobei die Zusammensetzung eine Viskosität, gemessen bei der Applikationstemperatur mit einem DIN-Becher mit einer 4 mm-Auslaufdüse, im Bereich von 10 bis 120 Sekunden, vorzugsweise im Bereich von 30 bis 90 Sekunden aufweist, mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach
d) die aufgebrachte Beschichtung durch Bestrahlen mit energiereicher Strahlung für eine Zeitdauer im Bereich von 0,001 bis 300 Sekunden, vorzugsweise im Bereich von 0.1 bis 30 Sekunden aushärtet.

14. Verfahren nach Anspruch 13 **dadurch gekennzeichnet, dass** die Metalloberflächen Oberflächen von kaltgewalztem Stahl, Aluminium oder von verzinkten oder legierungsverzinkten Stählen sind.

15. Metallgegenstand mit einer Korrosionsschutzschicht, der nach einem Verfahren nach einem der Ansprüche 13 und 14 herstellbar ist.

16. Metallgegenstand, der auf der Metalloberfläche ein Beschichtungssystem aus mindestens folgenden Einzelschichten aufweist:
a) leitfähige organische Korrosionsschutzschicht, die nach dem Verfahren nach Anspruch 13 erhältlich ist,
b) Pulverlackschicht mit einer Schichtdicke im Bereich von 70 bis 120 µm.

17. Metallgegenstand, der auf der Metalloberfläche ein Beschichtungssystem aus mindestens folgenden Einzelschichten aufweist:
a) leitfähige organische Korrosionsschutzschicht, die nach dem Verfahren nach Anspruch 13 erhältlich ist,
b) Elektrotauchlack,
c) ein- oder zweischichtiger Decklack.

18. Metallgegenstand nach Anspruch 17, **dadurch gekennzeichnet, dass** der Elektrotauchlack eine Dicke im Bereich von 25 bis 35 µm aufweist und dass zwischen diesem Elektrotauchlack und dem ein- oder zweischichtigen Decklack keine Füllerschicht vorhanden ist.

19. Verfahren zur Herstellung eines Metallgegenstands nach Anspruch 16, **dadurch gekennzeichnet, dass** man
I) Bleche mit einer beschichteten Metalloberfläche erzeugt, indem man
a) erforderlichenfalls die Metalloberfläche reinigt,
b) die Metalloberfläche mit einer. Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist,
c) hiernach die Metalloberflächen mit einer elektrisch leitfähigen und schweißbaren, im wesentlichen lösungsmittelfreien Korrosionsschutz-Zusammensetzung, die, bezogen auf die Gesamtzusammensetzung,
a) 5 bis 98 Gew,-% eines organischen Bindemittels,
b) 0 bis 15 Gew.-% eines Korrosionsschutzpigments,
c1) 20 bis 90 Gew.-% eines Leitfähigkeitspigments mit einer Dichte von mindestens 3 g/cm³, vorzugsweise ausgewählt aus jeweils pulverförmigern Zink, Eisen, Edelstahl, Molybdändisulfid, und Phosphiden und Oxiden des Eisens, die einzeln oder im Gemisch vorliegen können, wobei in diesem Fall der Mengenanteil an organischem Bindemittel a) maximal 80 Gew.-% beträgt, und/oder
c2) 2 bis 20 Gew.-% eines Leitfähigkeitspigments mit einer Dichte unterhalb von 3 g/cm³, vorzugsweise ausgewählt aus Aluminium, Ruß und Graphit sowie erwünschtenfalls bis zu 50 Gew.-% weitere Wirk - oder Hilfsstoffe enthält,
wobei sich die Anteile der Komponenten zu 100 % addieren und wobei die Zusammensetzung eine Viskosität, gemessen bei der Applikationstemperatur mit einem DIN-Becher mit einer 4 mm-Auslaufdüse, im Bereich von 10 bis 120 Sekunden, vorzugsweise im Bereich von 30 bis 90 Sekunden aufweist, mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach
d) die aufgebrachte Beschichtung durch Bestrahlen mit energiereicher Strahlung für eine Zeitdauer im Bereich von 0,001 bis 300 Sekunden, vorzugsweise im Bereich von 0,1 bis 30 Sekunden aushärtet,
II) Die Bleche zu Metallgegenständen mit Metalloberflächen umformt und/oder zusammenfügt,
III) erforderlichenfalls die Metalloberflächen der Metallgegenstände reinigt und
IV) die Metalloberflächen der Metallgegenstände mit einem Pulverlack mit einer Dicke von 70 bis 120 µm beschichtet.

20. Verfahren zur Herstellung eines Metallgegenstands nach einem oder beiden der Ansprüche 17 und 18, **dadurch gekennzeichnet, dass** man
I) Bleche mit einer beschichteten Metalloberfläche erzeugt, indem man
a) erforderlichenfalls die Metalloberfläche reinigt,
b) die Metalloberfläche mit einer Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist,
c) hiernach die Metalloberflächen mit einer elektrisch leitfähigen und schweißbaren, im wesentlichen lösungsmittelfreien Korrosionsschutz-Zusammensetzung, die, bezogen auf die Gesamtzusammensetzung,
a) 5 bis 98 Gew.-% eines organischen Bindemittels,
b) 0 bis 15 Gew.-% eines Korrosionsschutzpigments,
c1) 20 bis 90 Gew.-% eines Leitfähigkeitspigments mit einer Dichte von mindestens 3 g/cm³, vorzugsweise ausgewählt aus jeweils pulverförmigem Zink, Eisen, Edelstahl, Molybdändisulfid, und Phosphiden und Oxiden des Eisens, die einzeln oder im Gemisch vorliegen können, wobei in diesem Fall der Mengenanteil an organischem Bindemittel a) maximal 80 Gew.-% beträgt, und/oder
c2) 2 bis 20 Gew.-% eines Leitfähigkeitspigments mit einer Dichte unterhalb von 3 g/cm³, vorzugsweise ausgewählt aus Aluminium, Ruß und Graphit sowie erwünschtenfalls bis zu 50 Gew.-% weitere Wirk- oder Hilfsstoffe enthält,
wobei sich die Anteile der Komponenten zu 100 % addieren und wobei die Zusammensetzung eine Viskosität, gemessen bei der Applikationstemperatur mit einem DIN-Becher mit einer 4 mm-Auslaufdüse, im Bereich von 10 bis 120 Sekunden, vorzugsweise im Bereich von 30 bis 90 Sekunden aufweist, mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach
d) die aufgebrachte Beschichtung durch Bestrahlen mit energiereicher Strahlung für eine Zeitdauer Im Bereich von 0,001 bis 300 Sekunden, vorzugsweise im Bereich von 0,1 bis 30 Sekunden aushärtet,
II) Die Bleche zu Metallgegenständen mit Metalloberflächen umformt und/oder zusammenfügt,
III) erforderlichenfalls die Metalloberflächen der Metallgegenstände reinigt und
IV) die Metalloberflächen der Metallgegenstände mit einem kathodisch abscheidbaren Elektrotauchlack und danach
V) mit einem ein- oder zweischichtigen Decklack beschichtet.

21. Verfahren nach Anspruch 20 zur Herstellung eines Metallgegenstands nach Anspruch 18, **dadurch gekennzeichnet, dass** man
I) Bleche mit einer beschichteten Metalloberfläche erzeugt, indem man
a) erforderlichenfalls die Metalloberfläche reinigt,
b) die Metalloberfläche mit einer Flüssigkeit in Kontakt bringt, die mindestens eine organische Verbindung mit einer Molmasse von nicht mehr als 700 g/mol enthält, die mindestens eine durch radikalische Polymerisation vernetzbare Gruppe und mindestens eine H-aktive Gruppe aufweist.
c) hiernach die Metalloberflächen mit einer elektrisch leitfähigen und schweißbaren, im wesentlichen lösungsmittelfreien Korrosionsschutz-Zusammensetzung, die, bezogen auf die Gesamtzusammensetzung,
a) 5 bis 98 Gew.-% eines organischen Bindemittels,
b) 0 bis 15 Gew.-% eines Korrosionsschutzpigments,
c1) 20 bis 90 Gew.-% eines Leitfähigkeitspigments mit einer Dichte von mindestens 3 g/cm³, vorzugsweise ausgewählt aus jeweils pulverförmigem Zink, Eisen, Edelstahl, Molybdändisulfid, und Phosphiden und Oxiden des Eisens, die einzeln oder im Gemisch vorliegen können, wobei in diesem Fall der Mengenanteil an organischem Bindemittel a) maximal 80 Gew,-% beträgt, und/oder
c2) 2 bis 20 Gew.-% eines Leitfähigkeitspigments mit einer Dichte unterhalb von 3 g/cm³, vorzugsweise ausgewählt aus Aluminium, Ruß und Graphit sowie erwünschtenfalls bis zu 50 Gew.-% weitere Wirk- oder Hilfsstoffe enthält,
wobei sich die Anteile der Komponenten zu 100 % addieren und wobei die Zusammensetzung eine Viskosität, gemessen bei der Applikationstemperatur mit einem DIN-Becher mit einer 4 mm-Auslaufdüse, im Bereich von 10 bis 120 Sekunden, vorzugsweise im Bereich von 30 bis 90 Sekunden aufweist, mit einer solchen Schichtauflage beschichtet, dass man nach dem Aushärten im nachfolgenden Schritt d) eine Schichtdicke im Bereich von 0,5 bis 10 µm, vorzugsweise im Bereich von 1 bis 6 µm erhält, und danach -
d) die aufgebrachte Beschichtung durch Bestrahlen mit energiereicher Strahlung für eine Zeitdauer im Bereich von 0,001 bis 300 Sekunden, vorzugsweise im Bereich von 0,1 bis 30 Sekunden aushärtet,
II) Die Bleche zu Metallgegenständen mit Metalloberflächen umformt und/oder zusammenfügt,
III) erforderlichenfalls die Metalloberflächen der Metallgegenstände reinigt und
IV) die Metalloberflächen der Metallgegenstände mit einem kathodisch abscheidbaren Elektrotauchlack mit einer Dicke im Bereich von 25 bis 35 µm und danach ohne Aufbringen einer Füllerschicht
V) mit einem ein- oder zweischichtigen Decklack beschichtet.

22. Verfahren nach einem oder mehreren der Ansprüche 19 bis 21, **dadurch gekennzeichnet, dass** man im Schritt II) die Bleche zumindest teilweise durch Elektroschweißen zu den Metallgegenständen zusammenfügt.

## Claims

1. Electrically conductive and weldable, substantially solvent-free corrosion protection composition for coating metal surfaces, **characterized in that** it contains, based on the total composition,
a) 5 to 80% by weight of an organic binder,
b) 0 to 15% by weight of a corrosion protection pigment,
c1) up to 90% by weight of a conductive pigment having a density of at least 3 g/cm³, preferably selected from in each case pulverulent zinc, iron, stainless steel, molybdenum disulphide, and phosphides and oxides of iron, which may be present individually or as a mixture, the sum Σ(X_{L(i)}) of the proportions by weight of all conductive pigments (x_{L(i)}), based on the total composition and expressed as a decimal fraction, being in the range of Σ[(0.09 to 0.13)•Dᵢ·aᵢ], Dᵢ denoting the density of the i th conductive pigment in g/cm³ and aᵢ denoting the fraction of the amount by weight of the i th conductive pigment, based on the total amount by weight of all conductive pigments, with the condition that the sum Σ(x_{L(i)}) of the proportions by weight of all conductive pigments (x_{L(i)}), based on the total composition and expressed as a decimal fraction, is not greater than 0.9,
and, if desired, up to 50% by weight of further active substances or auxiliaries, the proportions of the components summing to 100%, the composition having a viscosity, measured at the application temperature using a DIN cup having a 4 mm efflux nozzle, in the range of 10 to 120 seconds, preferably in the range of 30 to 90 seconds.

2. Composition according to Claim 1, **characterized in that** it additionally contains
c2) 2 to 20% by weight of a conductive pigment having a density below 3 g/cm³, preferably selected from aluminium, carbon black and graphite.

3. Composition according to one or both of Claims 1 and 2, **characterized in that** the organic binder is chosen so that it is curable by the action of high-energy radiation.

4. Composition according to Claim 3, **characterized in that** the organic binder contains
aa) at least one resin capable of free radical polymerization,
ab) at least one reactive diluent,
ac) at least one photoinitiator.

5. Composition according to Claim 4, **characterized in that** the resin aa) capable of free radical polymerization is selected from polyester, urethane or epoxy-modified (meth)acrylate resins or a mixture thereof.

6. Composition according to one or both of Claims 4 and 5, **characterized in that** the organic binder contains, based on the total amount of the organic binder,
2 to 80% by weight of the components aa),
4 to 95% by weight of the components ab) and
0.1 to 10% by weight of the components ac),
the amounts summing to 100%.

7. Composition according to one or more of Claims 1 to 6, **characterized in that** the proportion by weight x_{B} of the organic binder, based on the total composition and expressed as a decimal fraction, is chosen so that it is in the range of [(0.5 to 1) minus (sum Σ(x_{L(i)}) of the proportions by weight of all conductive pigments)].

8. Composition according to one or more of Claims 4 to 7, **characterized in that** the resin capable of free radical polymerization has a molecular weight of at least 500.

9. Composition according to one or more of Claims 1 to 8, **characterized in that** it contains, as component b), at least one corrosion protection pigment and/or at least one corrosion inhibitor selected from doped silica, silicates of divalent metals, aluminium and zinc phosphates and modification products thereof, surface-modified titanium dioxide, alkoxytitanates, silanes, benzothiazole derivatives, zinc or calcium gluconates, salicylic acid derivatives and phosphoric acid esters of alkoxylated cellulose ("cellulose phosphate").

10. Composition according to one or more of Claims 1 to 9, **characterized in that** in each case pulverulent zinc, iron phosphide, iron oxide or a mixture of two or more of these substances is present as component c).

11. Composition according to one or more of Claims 1 to 10, **characterized in that** it is free of binder constituents containing reactive or capped isocyanate groups.

12. Use of the composition according to any of the preceding claims for coating metal strips in a coil coating process.

13. Method for coating metal surfaces with a conductive organic corrosion protection layer
**characterized in that**
a) if required, the metal surfaces are cleaned,
b) the metal surfaces are brought into contact with a liquid which contains at least one organic compound having a molar mass of not more than 700 g/mol, which has at least one group crosslinkable by free radical polymerization and at least one H-active group,
c) then the metal surfaces are coated with an electrically conductive and weldable, substantially solvent-free corrosion protection composition which contains, based on the total composition,
a) 5 to 98% by weight of an organic binder,
b) 0 to 15% by weight of a corrosion protection pigment,
c1) 20 to 90% by weight of a conductive pigment having a density of at least 3 g/cm³, preferably selected from in each case pulverulent zinc, iron, stainless steel, molybdenum disulphide, and phosphides and oxides of iron, which may be present individually or as a mixture, in this case the amounts of organic binder a) being not more than 80% by weight, and/or
c2) 2 to 20% by weight of a conductive pigment having a density below 3 g/cm³, preferably selected from aluminium, carbon black and graphite, and, if desired, up to 50% by weight of further active substances or auxiliaries, the proportions of the components summing to 100% and the composition having a viscosity, measured at the application temperature using a DIN cup having a 4 mm efflux nozzle, in the range of 10 to 120 seconds, preferably in the range of 30 to 90 seconds, with a layer such that, after the curing in the subsequent step d), a layer thickness in the range of 0.5 to 10 µm, preferably in the range of 1 to 6 µm, is obtained, and then
d) the applied coating is cured by exposure to high-energy radiation for a duration in the range of 0.001 to 300 seconds, preferably in the range of 0.1 to 30 seconds.

14. Method according to Claim 13, **characterized in that** the metal surfaces are surfaces of cold-rolled steel, aluminium or galvanized or alloy-galvanized steels.

15. Metal article having a corrosion protection layer, which can be produced by a method according to either of Claims 13 and 14.

16. Metal article which has, on the metal surface, a coating system comprising at least the following individual layers:
a) conductive organic corrosion protection layer which is obtainable by the method according to Claim 13,
b) powder coating layer having a layer thickness in the range of 70 to 120 µm.

17. Metal article which has, on the metal surface, a coating system comprising at least the following individual layers:
a) conductive organic corrosion protection layer which is obtainable by the method according to Claim 13,
b) electrodeposition coat,
c) one- or two-layer topcoat.

18. Metal article according to Claim 17, **characterized in that** the electrodeposition coat has a thickness in the range of 25 to 35 µm and **in that** no filler layer is present between this electrodeposition coat and the one- or two-layer topcoat.

19. Method for the production of a metal article according to Claim 16, **characterized in that**
I) metal sheets having a coated metal surface are produced by
a) if required, cleaning the metal surface,
b) bringing the metal surface into contact with a liquid which contains at least one organic compound having a molar mass of not more than 700 g/mol, which has at least one group crosslinkable by free radical polymerization and at least one H-active group,
c) then coating the metal surfaces with an electrically conductive and weldable, substantially solvent-free corrosion protection composition which contains, based on the total composition,
a) 5 to 98% by weight of an organic binder,
b) 0 to 15% by weight of a corrosion protection pigment,
c1) 20 to 90% by weight of a conductive pigment having a density of at least 3 g/cm³, preferably selected from in each case pulverulent zinc, iron, stainless steel, molybdenum disulphide, and phosphides and oxides of iron, which may be present individually or as a mixture, in this case the amount of organic binder a) being not more than 80% by weight, and/or
c2) 2 to 20% by weight of a conductive pigment having a density below 3 g/cm³, preferably selected from aluminium, carbon black and graphite, and, if desired, up to 50% by weight of further active substances or auxiliaries, the proportions of the components summing to 100% and the composition having a viscosity, measured at the application temperature using a DIN cup having a 4 mm efflux nozzle, in the range of 10 to 120 seconds, preferably in the range of 30 to 90 seconds, with a layer such that, after the curing in the subsequent step d), a layer thickness in the range of 0.5 to 10 µm, preferably in the range of 1 to 6 µm, is obtained, and then
d) curing the applied coating by exposure to high-energy radiation in the range of 0.001 to 300 seconds, preferably in the range of 0.1 to 30 seconds,
II) the metal sheets are formed and/or joined to give metal articles having metal surfaces,
III) if required, the metal surfaces of the metal articles are cleaned and
IV) the metal surfaces of the metal article are coated with a powder coat having a thickness of 70 to 120 µm.

20. Method for the production of a metal article according to one or both of Claims 17 and 18,
**characterized in that**
I) metal sheets having a coated metal surface are produced by
a) if required, cleaning the metal surface,
b) bringing the metal surface into contact with a liquid which contains at least one organic compound having a molar mass of not more than 700 g/mol, which has at least one group crosslinkable by free radical polymerization and at least one H-active group,
c) then coating the metal surfaces with an electrically conductive and weldable, substantially solvent-free corrosion protection composition which contains, based on the total composition,
a) 5 to 98% by weight of an organic binder,
b) 0 to 15% by weight of a corrosion protection pigment,
c1) 20 to 90% by weight of a conductive pigment having a density of at least 3 g/cm³, preferably selected from in each case pulverulent zinc, iron, stainless steel, molybdenum disulphide, and phosphides and oxides of iron, which may be present individually or as a mixture, in this case the amount of organic binder a) being not more than 80% by weight, and/or
c2) 2 to 20% by weight of a conductive pigment having a density below 3 g/cm³, preferably selected from aluminium, carbon black and graphite, and, if desired, up to 50% by weight of further active substances or auxiliaries, the proportions of the components summing to 100% and the composition having a viscosity, measured at the application temperature using a DIN cup having a 4 mm efflux nozzle, in the range of 10 to 120 seconds, preferably in the range of 30 to 90 seconds, with a layer such that, after the curing in the subsequent step d), a layer thickness in the range of 0.5 to 10 µm, preferably in the range of 1 to 6 µm, is obtained, and then
d) curing the applied coating by exposure to high-energy radiation in the range of 0.001 to 300 seconds, preferably in the range of 0.1 to 30 seconds,
II) the metal sheets are formed and/or joined to give metal articles having metal surfaces,
III) if required, the metal surfaces of the metal articles are cleaned and
IV) the metal surfaces of the metal articles are coated with a cathodic electrodeposition coat and then
V) with a one- or two-layer topcoat.

21. Method according to Claim 20 for the production of a metal article according to Claim 18, **characterized in that**
I) metal sheets having a coated metal surface are produced by
a) if required, cleaning the metal surface,
b) bringing the metal surface into contact with a liquid which contains at least one organic compound having a molar mass of not more than 700 g/mol, which has at least one group crosslinkable by free radical polymerization and at least one H-active group,
c) then coating the metal surfaces with an electrically conductive and weldable, substantially solvent-free corrosion protection composition which contains, based on the total composition,
a) 5 to 98% by weight of an organic binder,
b) 0 to 15% by weight of a corrosion protection pigment,
c1) 20 to 90% by weight of a conductive pigment having a density of at least 3 g/cm³, preferably selected from in each case pulverulent zinc, iron, stainless steel, molybdenum disulphide, and phosphides and oxides of iron, which may be present individually or as a mixture, in this case the amount of organic binder a) being not more than 80% by weight, and/or
c2) 2 to 20% by weight of a conductive pigment having a density below 3 g/cm³, preferably selected from aluminium, carbon black and graphite, and, if desired, up to 50% by weight of further active substances or auxiliaries,
the proportions of the components summing to 100% and the composition having a viscosity, measured at the application temperature using a DIN cup having a 4 mm efflux nozzle, in the range of 10 to 120 seconds, preferably in the range of 30 to 90 seconds, with a layer such that, after the curing in the subsequent step d), a layer thickness in the range of 0.5 to 10 µm, preferably in the range of 1 to 6 µm, is obtained, and then
d) curing the applied coating by exposure to high-energy radiation in the range of 0.001 to 300 seconds, preferably in the range of 0.1 to 30 seconds,
II) the metal sheets are formed and/or joined to give metal articles having metal surfaces,
III) if required, the metal surfaces of the metal articles are cleaned and
IV) the metal surfaces of the metal articles are coated with a cathodic electrodeposition coat having a thickness in the range of 25 to 35 µm and then, without application of a filler layer,
V) with a one- or two-layer topcoat.

22. Method according to one or more of Claims 19 to 21, **characterized in that**, in step II), the metal sheets are at least partly joined by electric arc welding to give the metal articles.

## Revendications

1. Composition de protection contre la corrosion, électroconductrice et permettant la soudure, essentiellement exempte de solvant, pour l'enduction de surfaces métalliques, **caractérisée en ce qu'**elle contient, rapportés à la composition totale :
a) à concurrence de 5 à 80 % en poids, un liant organique,
b) à concurrence de 0 à 15 % en poids, un pigment de protection contre la corrosion,
c1) jusqu'à concurrence de 90 % en poids, un pigment de conduction possédant une densité d'au moins 3 g/cm³, de préférence choisi parmi du zinc, du fer, de l'acier inoxydable, du disulfure de molybdène et des phosphures et des oxydes du fer, respectivement sous forme pulvérulente, qui peuvent être présents de manière individuelle ou en mélange, la somme Σ(x_{L(i)}) des fractions pondérales de tous les pigments de conduction (x_{L(i)}) par rapport à la composition totale, exprimée sous la forme d'une fraction décimale, se situant dans la plage de Σ[(0,09 à 0,13)•Dᵢ•aᵢ] où Dᵢ représente la densité du i-ième pigment de conduction en g/cm³ et aᵢ la fraction de la quantité pondérale du i-ième pigment de conduction par rapport à la quantité pondérale totale de tous les pigments de conduction, avec cette condition que la somme Σ(x_{L(i)}) des fractions pondérales de tous les pigments de conduction (x_{L(i)}) par rapport à la composition totale, exprimée sous la forme d'une fraction décimale, n'est pas supérieure à 0,9,
ainsi que, si on le souhaite, jusqu'à concurrence de 50 % en poids, d'autres substances actives ou d'autres adjuvants, les fractions des composants s'additionnant pour obtenir 100 %, la composition présentant une viscosité, mesurée à la température d'application avec un bécher DIN possédant un bec de sortie de 4 mm, dans la plage de 10 à 120 secondes, de préférence dans la plage de 30 à 90 secondes.

2. Composition selon la revendication 1, **caractérisée en ce qu'**elle contient en outre
c2) à concurrence de 2 à 20 % en poids, un pigment de conduction possédant une densité inférieure à 3 g/cm³, de préférence choisi parmi l'aluminium, le noir de carbone et le graphite.

3. Composition selon l'une quelconque des revendications 1 et 2 ou selon les deux, **caractérisée en ce que** le liant organique est sélectionné de telle sorte qu'il peut durcir sous l'influence d'un rayonnement riche en énergie.

4. Composition selon la revendication 3, **caractérisée en ce que** le liant organique contient
aa) au moins une résine apte à une polymérisation radicalaire ;
ab) au moins un diluant réactif ;
ac) au moins un photoinitiateur.

5. Composition selon la revendication 4, **caractérisée en ce que** la résine aa) apte à une polymérisation radicalaire est choisie parmi des résines de (méth)acrylate modifiées par du polyester, par de l'uréthane ou par un composé époxy, ou encore un de leurs mélanges.

6. Composition selon l'une quelconque des revendications 4 et 5 ou selon les deux, **caractérisée en ce que** le liant organique contient, rapportés à la quantité totale du liant organique :
à concurrence de 2 à 80 % en poids, le composant aa),
à concurrence de 4 à 95 % en poids, le composant ab), et
à concurrence de 0,1 à 10 % en poids, le composant ac),
les fractions pondérales s'additionnant pour obtenir 100 %.

7. Composition selon une ou plusieurs des revendications 1 à 6, **caractérisée en ce que** la fraction pondérale x_{B} du liant organique par rapport à la composition totale, exprimée sous la forme d'une fraction décimale, est sélectionnée de telle sorte qu'elle se situe dans la plage de [(0,5 à 1) moins (somme Σ(x_{L}(i)) des fractions pondérales de tous les pigments de conduction)].

8. Composition selon une ou plusieurs des revendications 4 à 7, **caractérisée en ce que** la résine apte à une polymérisation radicalaire présente un poids molaire d'au moins 500.

9. Composition selon une ou plusieurs des revendications 1 à 8, **caractérisée en ce qu'**elle contient, à titre de composant b), au moins un pigment de protection contre la corrosion et/ou au moins un inhibiteur de la corrosion choisi parmi de l'acide silicique dopé, des silicates de métaux divalents, des phosphates de l'aluminium et du zinc et leurs produits de modification, du dioxyde de titane dont la surface a été modifiée, des alcoxytitanates, des silanes, des dérivés de benzothiazole, des gluconates du zinc ou du calcium, des dérivés de l'acide salicylique et des esters de l'acide phosphorique de cellulose alcoxylée (« phosphate de cellulose »).

10. Composition selon une ou plusieurs des revendications 1 à 9, **caractérisée en ce qu'**est présent, à titre de composant c), du zinc, du phosphure de fer, de l'oxyde de fer, respectivement sous forme pulvérulente, ou un mélange de deux de ces substances ou plus.

11. Composition selon une ou plusieurs des revendications 1 à 10, **caractérisée en ce qu'**elle est exempte de constituants de liant contenant des groupes isocyanates aptes à réagir ou coiffés.

12. Utilisation de la composition selon l'une quelconque des revendications précédentes pour l'enduction de rubans métalliques dans le procédé de prélaquage en continu.

13. Procédé pour l'enduction de surfaces métalliques avec une couche organique conductrice de protection contre la corrosion, **caractérisé en ce que**
a) en cas de nécessité, on nettoie les surfaces métalliques,
b) on amène les surfaces métalliques en contact avec un liquide qui contient au moins un composé organique possédant une masse molaire qui n'est pas supérieure à 700 g/mole, qui présente au moins un groupe réticulable par polymérisation radicalaire et au moins un groupe contenant des atomes d'hydrogène actifs,
c) on enduit ensuite les surfaces métalliques avec une composition de protection contre la corrosion, électroconductrice et permettant la soudure, essentiellement exempte de solvant, qui contient, rapportés à la composition totale :
a) à concurrence de 5 à 98 % en poids, un liant organique,
b) à concurrence de 0 à 15 % en poids, un pigment de protection contre la corrosion,
c1) à concurrence de 20 à 90 % en poids, un pigment de conduction possédant une densité d'au moins 3 g/cm³, de préférence choisi parmi du zinc, du fer, de l'acier inoxydable, du disulfure de molybdène et des phosphures et des oxydes du fer, respectivement sous forme pulvérulente, qui peuvent être présents de manière individuelle ou en mélange, la fraction pondérale du liant organique a) s'élevant, dans le cas présent, au maximum à 80 % en poids, et/ou
c2) à concurrence de 2 à 20 % en poids, un pigment de conduction possédant une densité inférieure à 3 g/cm³, de préférence choisi parmi l'aluminium, le noir de carbone et le graphite, et, si on le souhaite, jusqu'à concurrence de 50 % en poids, d'autres substances actives ou d'autres adjuvants,
les fractions des composants s'additionnant pour obtenir 100 % et la composition présentant une viscosité, mesurée à la température d'application avec un bécher DIN possédant un bec de sortie de 4 mm, dans la plage de 10 à 120 secondes, de préférence dans la plage de 30 à 90 secondes, avec une application de couche telle que l'on obtient, après le durcissement, dans l'étape ultérieure d), une épaisseur de couche dans la plage de 0,5 à 10 µm, de préférence dans la plage de 1 à 6 µm, et ensuite
d) on durcit l'enduction appliquée par exposition à un rayonnement riche en énergie pendant un laps de temps dans la plage de 0,001 à 300 secondes, de préférence dans la plage de 0,1 à 30 secondes.

14. Procédé selon la revendication 13, **caractérisé en ce que** les surfaces métalliques sont des surfaces d'acier laminé à froid, d'aluminium ou encore d'aciers zingués ou alliés zingués.

15. Objet métallique possédant une couche de protection contre la corrosion, que l'on peut fabriquer conformément à un procédé selon l'une quelconque des revendications 13 et 14.

16. Objet métallique qui présente, sur la surface métallique, un système d'enduction constitué par au moins les couches individuelles suivantes :
a) une couche organique conductrice de protection contre la corrosion, que l'on peut obtenir conformément au procédé selon la revendication 13,
b) une couche de peinture ou de laque en poudre possédant une épaisseur de couche dans la plage de 70 à 120 µm.

17. Objet métallique qui présente, sur la surface métallique, un système d'enduction constitué par au moins les couches individuelles suivantes :
a) une couche organique conductrice de protection contre la corrosion, que l'on peut obtenir conformément au procédé selon la revendication 13,
b) une peinture électrophorétique par immersion,
c) une peinture de recouvrement monocouche ou bicouche.

18. Objet métallique selon la revendication 17, **caractérisé en ce que** la peinture électrophorétique par immersion présente une épaisseur dans la plage de 25 à 35 µm et **en ce qu'**aucune couche de remplissage n'est présente entre cette peinture électrophorétique par immersion et la peinture de recouvrement monocouche ou bicouche.

19. Procédé pour la fabrication d'un objet métallique selon la revendication 16, **caractérisé en ce que**
I) on produit des tôles possédant une surface métallique enduite,
a) en cas de nécessité, en nettoyant la surface métallique,
b) en amenant la surface métallique en contact avec un liquide qui contient au moins un composé organique possédant une masse molaire qui n'est pas supérieure à 700 g/mole, qui présente au moins un groupe réticulable par polymérisation radicalaire et au moins un groupe contenant des atomes d'hydrogène actifs,
c) en enduisant ensuite les surfaces métalliques avec une composition de protection contre la corrosion, électroconductrice et permettant la soudure, essentiellement exempte de solvant, qui contient, rapportés à la composition totale :
a) à concurrence de 5 à 98 % en poids, un liant organique,
b) à concurrence de 0 à 15 % en poids, un pigment de protection contre la corrosion,
c1) à concurrence de 20 à 90 % en poids, un pigment de conduction possédant une densité d'au moins 3 g/cm³, de préférence choisi parmi du zinc, du fer, de l'acier inoxydable, du disulfure de molybdène et des phosphures et des oxydes du fer, respectivement sous forme pulvérulente, qui peuvent être présents de manière individuelle ou en mélange, la fraction pondérale du liant organique a) s'élevant, dans le cas présent, au maximum à 80 % en poids, et/ou
c2) à concurrence de 2 à 20 % en poids, un pigment de conduction possédant une densité inférieure à 3 g/cm³, de préférence choisi parmi l'aluminium, le noir de carbone et le graphite, et, si on le souhaite, jusqu'à concurrence de 50 % en poids, d'autres substances actives ou d'autres adjuvants,
les fractions des composants s'additionnant pour obtenir 100 % et la composition présentant une viscosité, mesurée à la température d'application avec un bécher DIN possédant un bec de sortie de 4 mm, dans la plage de 10 à 120 secondes, de préférence dans la plage de 30 à 90 secondes, avec une application de couche telle que l'on obtient, après le durcissement, dans l'étape ultérieure d), une épaisseur de couche dans la plage de 0,5 à 10 µm, de préférence dans la plage de 1 à 6 µm, et ensuite
d) on durcit l'enduction appliquée par exposition à un rayonnement riche en énergie pendant un laps de temps dans la plage de 0,001 à 300 secondes, de préférence dans la plage de 0,1 à 30 secondes ;
II) on transforme ensuite par façonnement et/ou on assemble les tôles pour obtenir des objets métalliques possédant des surfaces métalliques,
III) en cas de nécessité, on nettoie les surfaces métalliques des objets métalliques, et
IV) on enduit les surfaces métalliques des objets métalliques avec une peinture en poudre possédant une épaisseur de 70 à 120 µm.

20. Procédé pour la fabrication d'un objet métallique selon l'une quelconque des revendications 17 ou 18 ou selon les deux, **caractérisé en ce que**
I) on produit des tôles possédant une surface métallique enduite,
a) en cas de nécessité, en nettoyant la surface métallique,
b) en amenant la surface métallique en contact avec un liquide qui contient au moins un composé organique possédant une masse molaire qui n'est pas supérieure à 700 g/mole, qui présente au moins un groupe réticulable par polymérisation radicalaire et au moins un groupe contenant des atomes d'hydrogène actifs,
c) en enduisant ensuite les surfaces métalliques avec une composition de protection contre la corrosion, électroconductrice et permettant la soudure, essentiellement exempte de solvant, qui contient, rapportés à la composition totale :
a) à concurrence de 5 à 98 % en poids, un liant organique,
b) à concurrence de 0 à 15 % en poids, un pigment de protection contre la corrosion,
c1) à concurrence de 20 à 90 % en poids, un pigment de conduction possédant une densité d'au moins 3 g/cm³, de préférence choisi parmi du zinc, du fer, de l'acier inoxydable, du disulfure de molybdène et des phosphures et des oxydes du fer, respectivement sous forme pulvérulente, qui peuvent être présents de manière individuelle ou en mélange, la fraction pondérale du liant organique a) s'élevant, dans le cas présent, au maximum à 80 % en poids, et/ou
c2) à concurrence de 2 à 20 % en poids, un pigment de conduction possédant une densité inférieure à 3 g/cm³, de préférence choisi parmi l'aluminium, le noir de carbone et le graphite, et, si on le souhaite, jusqu'à concurrence de 50 % en poids, d'autres substances actives ou d'autres adjuvants,
les fractions des composants s'additionnant pour obtenir 100 % et la composition présentant une viscosité, mesurée à la température d'application avec un bécher DIN possédant un bec de sortie de 4 mm, dans la plage de 10 à 120 secondes, de préférence dans la plage de 30 à 90 secondes, avec une application de couche telle que l'on obtient, après le durcissement, dans l'étape ultérieure d), une épaisseur de couche dans la plage de 0,5 à 10 µm, de préférence dans la plage de 1 à 6 µm, et ensuite
d) en durcissant l'enduction appliquée par exposition à un rayonnement riche en énergie pendant un laps de temps dans la plage de 0,001 à 300 secondes, de préférence dans la plage de 0,1 à 30 secondes ;
II) on transforme ensuite par façonnement et/ou on assemble les tôles pour obtenir des objets métalliques possédant des surfaces métalliques,
III) en cas de nécessité, on nettoie les surfaces métalliques des objets métalliques, et
IV) on enduit les surfaces métalliques des objets métalliques avec une peinture électrophorétique par immersion apte à précipiter par voie cathodique et ensuite
V) avec une peinture de recouvrement monocouche ou bicouche.

21. Procédé selon la revendication 20, pour la fabrication d'un objet métallique selon la revendication 18, **caractérisé en ce que**
I) on produit des tôles possédant une surface métallique enduite,
a) en cas de nécessité, en nettoyant la surface métallique,
b) en amenant la surface métallique en contact avec un liquide qui contient au moins un composé organique possédant une masse molaire qui n'est pas supérieure à 700 g/mole, qui présente au moins un groupe réticulable par polymérisation radicalaire et au moins un groupe contenant des atomes d'hydrogène actifs,
c) en enduisant ensuite les surfaces métalliques avec une composition de protection contre la corrosion, électroconductrice et permettant la soudure, essentiellement exempte de solvant, qui contient, rapportés à la composition totale :
a) à concurrence de 5 à 98 % en poids, un liant organique,
b) à concurrence de 0 à 15 % en poids, un pigment de protection contre la corrosion,
c1) à concurrence de 20 à 90 % en poids, un pigment de conduction possédant une densité d'au moins 3 g/cm³, de préférence choisi parmi du zinc, du fer, de l'acier inoxydable, du disulfure de molybdène et des phosphures et des oxydes du fer, respectivement sous forme pulvérulente, qui peuvent être présents de manière individuelle ou en mélange, la fraction pondérale du liant organique a) s'élevant, dans le cas présent, au maximum à 80 % en poids, et/ou
c2) à concurrence de 2 à 20 % en poids, un pigment de conduction possédant une densité inférieure à 3 g/cm³, de préférence choisi parmi l'aluminium, le noir de carbone et le graphite, et, si on le souhaite, jusqu'à concurrence de 50 % en poids, d'autres substances actives ou d'autres adjuvants,
les fractions des composants s'additionnant pour obtenir 100 % et la composition présentant une viscosité, mesurée à la température d'application avec un bécher DIN possédant un bec de sortie de 4 mm, dans la plage de 10 à 120 secondes, de préférence dans la plage de 30 à 90 secondes, avec une application de couche telle que l'on obtient, après le durcissement, dans l'étape ultérieure d), une épaisseur de couche dans la plage de 0,5 à 10 µm, de préférence dans la plage de 1 à 6 µm, et ensuite
d) en durcissant l'enduction appliquée par exposition à un rayonnement riche en énergie pendant un laps de temps dans la plage de 0,001 à 300 secondes, de préférence dans la plage de 0,1 à 30 secondes ;
II) on transforme ensuite par façonnement et/ou on assemble les tôles pour obtenir des objets métalliques possédant des surfaces métalliques,
III) en cas de nécessité, on nettoie les surfaces métalliques des objets métalliques, et
IV) on enduit les surfaces métalliques des objets métalliques avec une peinture électrophorétique par immersion apte à précipiter par voie cathodique avec une épaisseur dans la plage de 25 à 35 µm, et ensuite, sans appliquer une couche de remplissage,
V) avec une peinture de recouvrement monocouche ou bicouche.

22. Procédé selon une ou plusieurs des revendications 19 à 21, **caractérisé en ce que**, à l'étape II), on assemble les tôles au moins en partie par électrosoudure pour obtenir les objets métalliques,.
